# EUROPEAN PATENT APPLICATION

(11) **EP 4 464 505 A1**
(43) Date of publication of application: **20.11.2024**
(21) Application number: 23305780.1
(22) Date of filing: 16.05.2023
(51) Int. Cl.: B29D 11/00

(54) **MACHINE FOR FILING A LENS MOLD ASSEMBLY**

(71) Applicant: Essilor International, 94220 Charenton-Le-Pont (FR)
(72) Inventor: MORALES, Nelson, 31135 Chilhuahua (MX); MUNBORIRUX, Permsap, 10520 Bangkok (TH)
(74) Representative: Jacobacci Coralis Harle

(57) **Abstract**

A machine for filling of a lens mold assembly, the machine including a filling workstation and a pre-filling workstation for preparing the lens mold assembly prior to transferring to the filling workstation. The pre-filling workstation includes a lens-mold-assembly-rotation unit operable to hold and rotate the lens mold assembly; a tape-tail-lifting unit having a force applicator operable to apply a force to graze a circumferential surface of a tape around the lens mold assembly to lift open a first tail-end portion of the tape, and a tape-tail-finding unit to intercept the lifted first tail end portion of the tape as the lens mold assembly is being rotated by the lens-mold-assembly-rotation unit and to detect whether the first tail end portion of the tape is intercepted, wherein the lens-mold-assembly rotation unit is configured to stop rotating based a detection that the first tail end portion of the tape is intercepted.

## Description

Various embodiments generally relate to a machine for filling of a lens mold assembly. In particular, various embodiments generally relate to automated machine for filling of the lens mold assembly. The automated machine being capable of automatic tape finding, automatic orientating of the lens mold assembly with respect to a filling nozzle, and automatic opening of a tape of the lens mold assembly.

### BACKGROUND

Conventional method for filling of a lens mold assembly is via a manual process. Typically, an operator will hold the lens mold assembly in the hand and finds the tape tail of the lens mold assembly visually, grasps it and pulls open the tape to open the lens mold assembly for filling. After that, the operator brings the opened lens mold assembly near to the monomer filling nozzle for positioning with respect to the filling nozzle. Once the lens mold assembly is positioned under the filling nozzle, the operator will start the filling by pressing the filling pedal. During the whole filling process, the opened tape is being held by the operator to keep the lens mold assembly open. The filling stoppage is up to the operator's judgment and it is done by pressing the filling pedal. Once filling is finished, the operator pulls the tape back in a direction towards the assembly edge to close the lens mold assembly. To reseal the tape, the operator uses a plastic jig and presses the tape against the lens mold assembly edges several times in a back-and-forth movement. This manual filling process is time consuming, dependent on the operator's skill and prone to defect caused by the operator. For example, there may be inconsistency in how much of the tape is opened by the operator; possibility of over and/or under filling; leakage; inconsistency in positioning of the lens mold assembly with respect to the filling nozzle resulting in turbulent flow, bubble forming; difficulty in tape finding and tape opening etc.

Accordingly, there is a need to provide a more efficient solution for filling of the lens-mold-assembly to address at least some of the issues above.

### SUMMARY

According to various embodiments, there is provided a machine for filling of a lens mold assembly. The lens mold assembly includes a first mold part, a second mold part spaced apart from the first mold part to define a molding cavity therebetween, and a tape surrounding the molding cavity with a first longitudinal side of the tape along a perimeter of the first mold part and a second longitudinal side of the tape along a perimeter of the second mold part. Further, a first tail-end portion of the tape laps over a second tail-end portion of the tape. The machine including a filling workstation for filling the molding cavity of the lens mold assembly with a liquid molding material; and a pre-filling workstation for preparing the lens mold assembly prior to transferring to the filling workstation, the pre-filling workstation being configured to set the first tail-end portion of the tape in a pre-determined disposition apart from the second tail-end portion in preparation for transferring to the filling workstation. The pre-filling workstation includes a lens-mold-assembly-rotation unit having a rotary component rotatable about a component rotational axis, wherein the rotary component is operable to hold and rotate the lens mold assembly with the component rotational axis extending through a center of the first mold part and a center of the second mold part. The pre-filling workstation includes a tape-tail-lifting unit having a force applicator disposed at a first radial position from the component rotational axis of the rotary component of the lens-mold-assembly-rotation unit. The force applicator is operable to apply a force to graze a circumferential surface of the tape around the lens mold assembly as the lens mold assembly is being rotated by the lens-mold-assembly-rotation unit, wherein the first tail-end portion is lifted open by the force when the force interacts with the first tail-end portion of the tape. The pre-filling workstation includes a tape-tail-finding unit comprising including a tape-tail-finding-member at a second radial position from the component rotational axis of the rotary component of the lens-mold-assembly-rotation unit, the tape-tail-finding-member having a tape contact surface, wherein the tape contact surface of the tape-tail-finding-member is capable of intercepting the first tail end portion of the tape of the lens mold assembly as the lens mold assembly is being rotated on the rotary component of the lens-mold-assembly-rotation unit, and a sensing arrangement disposed in relation to the tape-tail-finding-member, the sensing arrangement being configured to detect whether the first tail end portion of the tape is in contact with the tape contact surface of the tape-tail-finding-member. Further, the lens-mold-assembly-rotation unit is configured to stop the rotary component from rotating based on the sensing arrangement detecting the first tail end portion of the tape is in contact with the tape contact surface of the tape-tail-finding-member.

According to various embodiments, the tape-tail-finding unit of the pre-filling workstation may further include a tape-tail-pusher having a pusher tip movable between an extended state and a retracted state with respect to the tape contact surface of the tape-tail-finding-member, wherein, in the extended state, the pusher tip may protrude from the tape contact surface in a manner so as to push back the first tail end portion of the tape of the lens mold assembly from the tape contact surface.

According to various embodiments, the tape contact surface of the tape-tail-finding-member may include a recess and the pusher tip is retracted into the recess of the tape contact surface when the pusher tip is in the retracted state.

According to various embodiments, the force applicator may include a blower to generate a current of air to apply the force grazing the circumferential surface of the tape around the lens mold assembly, or a contact element to apply a frictional force serving as the force grazing the circumferential surface of the tape around the lens mold assembly.

According to various embodiments, the sensing arrangement may be disposed at the tape contact surface of the tape-tail-finding-member, and wherein the sensing arrangement may include one or more optical sensors, contact sensors, or proximity sensors.

According to various embodiments, the tape-tail-finding-member may be moveable relative to the lens-mold-assembly-rotation unit, and the tape-tail-finding-member may be moved from a withdrawn position to the second radial position upon provision of the lens mold assembly to the rotary component of the lens-mold-assembly-rotation unit.

According to various embodiments, the filling workstation may include a lens-mold-assembly holder having a holder axis and operable to hold the lens mold assembly with the holder axis extending through the center of the first mold part and the center of the second mold part of the lens mold assembly; and a tape opening unit including a gripping sub-unit having a gripper disposed relative to the lens-mold-assembly holder to hold the first tail-end portion of the tape of the lens mold assembly, which is set at the pre-determined disposition by the pre-filling workstation, when the lens mold assembly is transferred from the pre-filling workstation to the filling workstation.

According to various embodiments, the gripper may be movable from a first position proximal to the lens-mold-assembly holder to a second position distal from the lens-mold-assembly holder for pulling the first tail-end portion of the tape of the lens mold assembly to open away from the second tail-end portion of the tape of the lens mold assembly.

According to various embodiments, the filling workstation may further include a filling nozzle having a nozzle axis, wherein the filling nozzle is oriented with the nozzle axis perpendicular to the holder axis of the lens-mold-assembly holder; and an alignment arrangement including at least one sensor fixedly disposed relative to the filling nozzle to detect an end edge of the second tail-end portion of the tape when the first tail-end portion of the tape is opened away from the second tail-end portion of the tape by the gripper. Further, the lens-mold-assembly holder may be rotatable about the holder axis. When the first tail-end portion of the tape is opened away from the second tail-end portion of the tape by the gripper, the lens-mold-assembly holder may be operable cooperatively with the alignment arrangement to rotate the lens mold assembly about the holder axis based on feedback from the at least one sensor of the alignment arrangement to align the end edge of the second tail-end portion of the tape to a pre-set position so as to orient the lens mold assembly into a pre-determined orientation for filling of the liquid molding material.

According to various embodiments, the filling workstation may further include a tape engagement unit including an engagement blade disposed at a radial position from the holder axis of the lens-mold-assembly holder. When the gripper is moved to the second position for pulling the first tail-end of the tape to open away from the second tail-end of the tape, the tape may be rested against a tip of the engagement blade of the tape engagement unit and bent by the tip of the engagement blade of the tape engagement unit to form a fold. In the pre-determined orientation of the lens mold assembly, a filling window of the lens mold assembly defined by a gap between the fold of the tape at the tip of the engagement blade of the tape engagement unit and the end edge of the second tail-end portion of the tape may have a pre-determined arc length.

According to various embodiments, the filling nozzle may be located between the engagement blade of the tape engagement unit and the at least one sensor of the alignment arrangement.

According to various embodiments, the tape engagement unit may include a tape immobilising arrangement at the engagement blade, the tape immobilising arrangement being configured to adhere the tape to the engagement blade so as to hold the tape in place.

According to various embodiments, the tape immobilising arrangement may include a suction arrangement, a friction arrangement, an adhesive arrangement, or a fastening arrangement. Further, the tape engagement unit may include a tape sensing element to detect that the tape is rested against the tip of the engagement blade of the tape engagement unit during filling of the liquid molding material.

According to various embodiments, the filling nozzle and the at least one sensor of the alignment arrangement may be moveable together between a stowed position and an operative position. Further, in the operative position, the at least one sensor of the alignment arrangement may be operable to detect whether the end edge of the second tail-end portion of the tape is aligned to the pre-set position.

According to various embodiments, the gripper may include a pair of gripping jaws operable to open and close for clamping the first tail-end portion of the tape of the lens mold assembly.

According to various embodiments, the gripping sub-unit may include a tape-tail-sensing arrangement associated with the gripper, wherein the tape-tail-sensing arrangement may be configured to detect whether the first tail end portion of the tape is in place for the gripper to hold the first tail end portion of the tape.

According to various embodiments, the gripper may be actuated to hold the first tail end portion of the tape when the tape-tail-sensing arrangement detects the first tail end portion of the tape is in place for the gripper to hold the first tail end portion of the tape.

According to various embodiment, the machine may further include a transfer arrangement configured to transfer the lens mold assembly from the pre-filling workstation to the filling workstation. The transfer arrangement may include a primary holder movable between the pre-filling workstation and the filling workstation for transferring the lens mold assembly from the pre-filling workstation to the filling workstation, wherein, the primary holder is operable to pick up the lens mold assembly from the rotary component of the lens-mold-assembly-rotation unit of the pre-filling workstation when the primary holder is at the pre-filling workstation and to release the lens mold assembly to the lens-mold-assembly holder of the filling workstation when the primary holder is at the filling workstation. The transfer arrangement may include a tape-tail-retainer associated with the primary holder, wherein the tape-tail-retainer maintains the first tail-end portion of the tape of the lens mold assembly in the pre-determined disposition when the lens mold assembly is held by the primary holder. When the primary holder is picking up the lens mold assembly from the pre-filling workstation, the tape-tail-retainer may be inserted between the tape contact surface of the tape-tail-finding-member of the tape-tail-finding-unit of the pre-filling workstation and the first tail-end portion of the tape of the lens mold assembly while the lens mold assembly is held by the rotary component of the lens-mold-assembly-rotation unit of the pre-filling workstation. When the primary holder releases the lens mold assembly to the lens-mold-assembly holder of the filling workstation, the tape-tail-retainer may transfer the first tail-end portion of the tape of the lens mold assembly in the pre-determined disposition to the gripper of the gripping sub-unit of the tape opening unit.

According to various embodiments, the tape-tail-retainer may be deployable and retractable between a deployed position and a home position. The tape-tail-retainer may be deployed to the deployed position when the primary holder is picking up the lens mold assembly from the rotary component of the lens-mold-assembly-rotation unit of the pre-filling workstation, and may be retracted to the home position when the first tail-end portion of the tape of the lens mold assembly is transferred to the gripper of the gripping sub-unit of the tape opening unit.

According to various embodiments, the primary holder may be supported by a biasing member so as to provide a soft engagement when the primary holder is picking up the lens mold assembly from the pre-filling workstation.

According to various embodiments, the transfer arrangement may be further configured to transfer the lens mold assembly from the filling workstation to an outbound conveyor. Further, the transfer arrangement may include a secondary holder movable between the filling workstation and the outbound conveyor, wherein the secondary holder may be operable to pick up the lens mold assembly from the lens-mold-assembly holder of the filling workstation when the secondary holder is at the filling workstation and to release the lens mold assembly to the outbound conveyor when the secondary holder is at the outbound conveyor.

According to various embodiments, the secondary holder may be supported by a biasing member so as to provide a soft engagement when the secondary holder is picking up the lens mold assembly from the filling workstation.

According to various embodiments, the transfer arrangement may include a carrier unit. The carrier unit may include the primary holder, the secondary holder, and a holder swapping mechanism for exchanging positions of the primary holder and the secondary holder.

According to various embodiments, the holder swapping mechanism may include a frame rotatable about a frame rotational axis, wherein the primary holder and the secondary holder may be coupled to the frame in a manner so as to be spaced angularly apart from each other around the frame rotational axis.

According to various embodiments, the carrier unit may be moveable from the pre-filling workstation to the filling workstation for transferring the lens mold assembly from the pre-filling workstation to the filling workstation using the primary holder, and moveable from the filling workstation to the outbound conveyor for transferring the lens mold assembly from the filling workstation to the outbound conveyor using the secondary holder.

According to various embodiments, the carrier unit may be further moveable from an inbound conveyor to the pre-filling workstation for transferring the lens mold assembly from the inbound conveyor to the pre-filling workstation using the secondary holder.

According to various embodiments, the lens-mold-assembly holder of the filling workstation may include a support ring for supporting the lens mold assembly, wherein the holder axis of the lens-mold-assembly holder may extend through a center of the support ring, and a plurality of gripping fingers distributed around the support ring, each gripping finger oriented parallel to the holder axis of the lens-mold-assembly holder, wherein the plurality of gripping fingers may be movable radially inwards with respect to the holder axis of the lens-mold-assembly holder to hold the lens mold assembly.

According to various embodiments, the plurality of gripping fingers of the lens-mold-assembly holder of the filling workstation moving radially inwards with respect to the holder axis of the lens-mold-assembly holder to hold the lens mold assembly may be synchronized with the primary holder of the transfer arrangement releasing the lens mold assembly to the lens-mold-assembly holder of the filling workstation.

According to various embodiment, each of the plurality of gripping fingers may be made of stainless steel (SUS).

According to various embodiments, the support ring may be made of polyoxymethylene (POM).

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG. 1A and FIG. 1B show a cross-sectional view and a plan view of an example of a lens mold assembly according to various embodiments.
FIG. 2 shows a schematic diagram of a machine for filing the lens mold assembly according to various embodiments.
FIG. 3 shows an example of a pre-filling workstation of the machine of FIG. 2 according to various embodiments.
FIG. 4 shows a sequence of schematic diagrams illustrating the operations of the pre-filling workstation of FIG. 3 according to various embodiments.
FIG. 5A and FIG. 5B show a sequence of a filling workstation of the machine of FIG. 2 opening a filling window in the lens mold assembly according to various embodiments.
FIG. 6 shows a perspective side view of the filling workstation according to various embodiments.
FIG. 7A and FIG. 7B show a sequence of fine adjustment of a size of the filling window according to various embodiments.
FIG. 8 shows a transfer arrangement of the machine of FIG. 2 according to various embodiments.
FIG. 9 shows a sequence of schematic diagrams illustrating the operations of the pre-filling workstation and the interaction with the transfer arrangement according to various embodiments.
FIG. 10A and FIG. 10B show the transfer arrangement picking up the lens mold assembly from the pre-filling workstation according to various embodiments.
FIG. 11 shows the transfer arrangement transferring the lens mold assembly to the filling workstation according to various embodiments.
FIG. 12 shows a zoomed in view of the transfer of the lens mold assembly from the transfer arrangement to the filling workstation according to various embodiments.
FIG. 13 shows the transfer arrangement unloading the lens mold assembly from the filling workstation according to various embodiments.

### DETAILED DESCRIPTION OF EMBODIMENTS

In the description which follows the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

It should be understood that the terms "on", "over", "top", "bottom", "down", "side", "back", "left", "right", "front", "lateral", "side", "up", "down" etc., when used in the following description are used for convenience and to aid understanding of relative positions or directions, and not intended to limit the orientation of any device, or structure or any part of any device or structure. In addition, the singular terms "a", "an", and "the" include plural references unless context clearly indicates otherwise. Similarly, the word "or" is intended to include "and" unless the context clearly indicates otherwise.

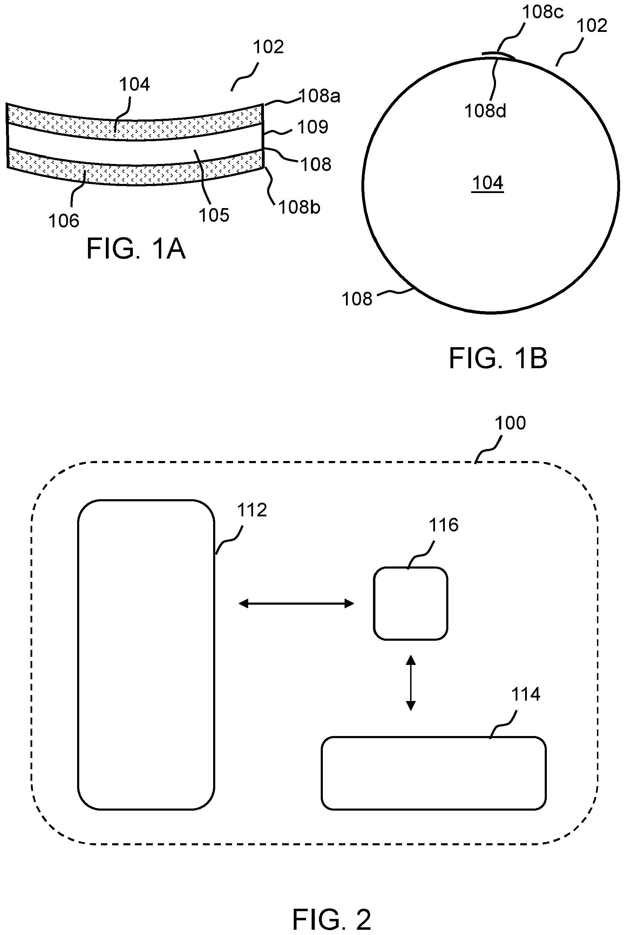

Various embodiments seek to provide a machine for filling of a lens mold assembly. FIG. 1A and FIG. 1B show a cross-sectional view and a plan view of an example of a lens mold assembly 102 according to various embodiments. According to various embodiments, the lens mold assembly 102 may include a first mold part 104 (e.g., a first molding shell) and a second mold part 106 (e.g., a second molding shell) spaced apart from the first mold part 104 to define a molding cavity 105 therebetween. The first mold part 104 may be a convex molding shell forming a top mold and the second mold part 106 may be a concave molding shell forming a bottom mold. According to various embodiments, the lens mold assembly 102 may include a tape 108 surrounding the molding cavity 105. A first longitudinal side 108a of the tape 108 may run along a perimeter of the first mold part 104. A second longitudinal side 108b of the tape 108 may run along a perimeter of the second mold part 106. Accordingly, the tape 108 may wrap around the perimeter of the first mold part 104 and the perimeter of the second mold part 106 so as to surround the molding cavity 105 between the first mold part 104 and the second mold part 106. Further, a first tail-end portion 108c of the tape 108 may lap over a second tail-end portion 108d of the tape 108. Accordingly, the tape 108 may fully wrap around the perimeter of the first mold part 104 and the perimeter of the second mold part 106 such that an excess of the tape 108 (i.e., the first tail-end portion 108c of the tape 108), at an end of the tape 108, extends over and cover a part of the tape 108 (i.e., the second tail-end portion 108d of the tape 108), at an opposite end of the tape 108.

FIG. 2 shows a schematic diagram of a machine 100 for filing the lens mold assembly 102. According to various embodiments, the machine 100 may include a filling workstation 112. The filling workstation 112 may be operated to fill the molding cavity 105 of the lens mold assembly 102 with a liquid molding material (e.g., monomer). According to various embodiments, the machine 100 may include a pre-filling workstation 114. The pre-filling workstation 114 may be operated to prepare the lens mold assembly 102 prior to transferring the lens mold assembly 102 to the filling workstation 112. For example, the pre-filling workstation 114 may be operated to find a tape tail of the tape 108 of the lens mold assembly 102 (e.g., the first tail-end portion 108c of the tape 108). According to various embodiments, the lens mold assembly 102 may be transferred from the pre-filling workstation 114 to the filling workstation 112 with the tape tail of the tape 108 of the lens mold assembly 102 (e.g., the first tail-end portion 108c of the tape 108) being passed over to the filling workstation 112. The filling workstation 112 may then be operated to open the tape tail of the tape 108 of the lens mold assembly 102 to access the molding cavity 105 of the lens mold assembly 102 for filling the molding cavity 105.

According to various embodiments, the pre-filling workstation 114 may be for preparing the lens mold assembly 102 prior to transferring to the filling workstation 112, whereby the pre-filling workstation 114 may be configured to set the first tail-end portion 108c of the tape 108 in a pre-determined disposition apart from the second tail-end portion 108d in preparation for transferring to the filling workstation 112. Accordingly, the pre-filling workstation 114 may be configured to lift the first tail-end portion 108c of the tape 108 away from the second tail-end portion 108d of the tape 108, wherein the first tail-end portion 108c and the second tail-end portion 108d are separated from each other. Hence, in the pre-determined disposition, the first tail-end portion 108c may not be covering over the second tail-end portion 108d (i.e., the first tail-end portion 108c and the second tail-end portion 108d may be non-overlapping or may not directly overlap each other). Thus, with the first tail-end portion 108c set in the pre-determined disposition apart from the second tail-end portion 108d by the pre-filling workstation 114, the tape tail of the tape 108 of the lens mold assembly 102 (e.g., the first tail-end portion 108c of the tape 108) may be considered to be found by the pre-filling workstation 114 for transferring to the filling workstation 112.

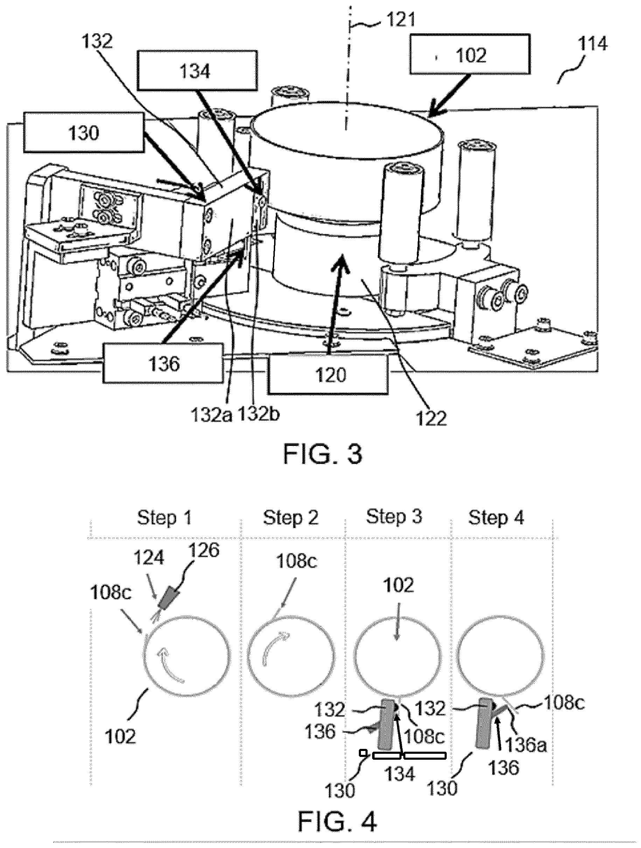

FIG. 3 shows an example of the pre-filling workstation 114 of the machine 100 according to various embodiments. FIG. 4 shows a sequence of schematic diagrams illustrating the operations of the pre-filling workstation 114 according to various embodiments.

According to various embodiments, the pre-filling workstation 114 may include a lens-mold-assembly-rotation unit 120. The lens-mold-assembly-rotation unit 120 may include a rotary component 122 rotatable about a component rotational axis 121. According to various embodiments, the lens mold assembly 102 may be placed on the rotary component 122 of the lens-mold-assembly-rotation unit 120. For example, the lens mold assembly 102 may be picked up from an input conveyor and be moved to the rotary component 122 of the lens-mold-assembly-rotation unit 120. Accordingly, the rotary component 122 may hold or support or receive or retain or the lens mold assembly 102. According to various embodiments, the rotary component 122 may be operable to hold and rotate the lens mold assembly 102 with the component rotational axis 121 extending through a center of the first mold part 104 of the lens mold assembly 102 and a center of the second mold part 106 of the lens mold assembly 102. Accordingly, the lens mold assembly 102 may be held by the rotary component 122 of the lens-mold-assembly-rotation unit 120 in a manner such that the component rotational axis 121 of the rotary component 122 passes through the center of the first mold part 104 of the lens mold assembly 102 and the center of the second mold part 106 of the lens mold assembly 102. With the lens mold assembly 102 held by the rotary component 122, the lens mold assembly 102 may be rotated about the component rotational axis 121 as the rotary component 122 rotates about the component rotational axis 121. Hence, the rotary component 122 of the lens-mold-assembly-rotation unit 120 may be rotated to rotate the lens mold assembly 102. According to various embodiments, the rotary component 122 may include an attachment element for holding or retaining the lens mold assembly 102 to the rotary component 122. For example, the attachment element may include suction-based element, adhesive-based element, friction-based element, or fastening element. Further, the lens-mold-assembly-rotation unit 120 may include a motor for driving the rotation of the rotary component 122. According to an implementation, the rotary component 122 may be a rotary vacuum chuck, whereby the rotary vacuum chuck may hold the lens mold assembly 102 via vacuum suction and the rotary vacuum chuck may be driven by servo motor. Further, in the implementation, the rotary vacuum chuck may be made of polyoxymethylene (POM).

According to various embodiments, the pre-filling workstation 114 may include a tape-tail-lifting unit 124. The tape-tail-lifting unit 124 may have a force applicator 126. The force applicator 126 may be disposed at a first radial position from the component rotational axis 121 of the rotary component 122 of the lens-mold-assembly-rotation unit 120. Accordingly, the force applicator 126 of the tape-tail-lifting unit 124 may be positioned along a first radius (or first radial line) extending perpendicularly from the component rotational axis 121 of the rotary component 122. According to various embodiments, the force applicator 126 of the tape-tail-lifting unit 124 may be operable to apply a force to graze a circumferential surface 109 of the tape 108 around the lens mold assembly 102 as the lens mold assembly 102 is being rotated by the lens-mold-assembly-rotation unit 120. Hence, the force applicator 126 may be operated to apply the force to the circumferential surface 109 of the tape 108 in a manner so as to abrade or scrape or rub or touch the circumferential surface 109 of the tape 108 while the tape 108 is rotating together with the lens mold assembly 102 about the component rotational axis 121 of the rotary component 122 as the lens mold assembly 102 is being held and rotated by the rotary component 122 of the lens-mold-assembly-rotation unit 120. According to various embodiments, the first tail-end portion 108c of the tape 108 may be lifted open by the force from the force applicator 126 when the force interacts with the first tail-end portion 108c of the tape 108. With the force of the force applicator 126 grazing the circumferential surface 109 of the tape 108, the force may act on the first tail-end portion 108c of the tape 108 when the tape 108 is rotated to bring the first tail-end portion 108c into the line of action of the force. The force acting on the first tail-end portion 108c of the tape 108, which overlaps the second tail-end portion 108d of the tape 108, may then cause the first tail-end portion 108c of the tape 108 to separate and rise above the second tail-end portion 108d of the tape 108 such that the first tail-end portion 108c and the second tail-end portion 108d may be set apart or spaced apart from each other (or the first tail-end portion 108c may be opened away from the second tail-end portion 108d). Therefore, the tape-tail-lifting unit 124 may be operated cooperatively with the lens-mold-assembly-rotation unit 120 to lift the first tail-end portion 108c of the tape 108 when the lens mold assembly 102 is being held and rotated by the lens-mold-assembly-rotation unit 120. According to an implementation, the force applicator 126 may be a blower or a pneumatic blower. Accordingly, the blower or the pneumatic blower may be operated to blow air (or generate a current of air) towards the circumferential surface 109 of the tape 108 for applying the force to graze the circumferential surface 109 of the tape 108 so as to separate or open the tape tail (i.e., the first tail-end portion 108c of the tape 108). According to another implementation, the force applicator 126 may be a contact element operable to apply a frictional force serving as the force grazing the circumferential surface 109 of the tape 108 around the lens mold assembly 102 so as to cause the first tail-end portion 108c of the tape 108 to open.

According to various embodiments, the pre-filling workstation 114 may include a tape-tail-finding unit 130. The tape-tail-finding unit 130 may be configured to find or search or locate or detect the first tail-end portion 108c of the tape 108 that is lifted or opened by the tape-tail-lifting unit 124. With the first tail-end portion 108c of the tape 108 found, the tape-tail-finding unit 130 may be further operated to interact with the first tail-end portion 108c of the tape 108 to set the first tail-end portion 108c of the tape 108 in the pre-determined disposition apart from the second tail-end portion 108d.

According to various embodiments, the tape-tail-finding unit 130 may include a tape-tail-finding-member 132. The tape-tail-finding-member 132 may be at a second radial position from the component rotational axis 121 of the rotary component 122 of the lens-mold-assembly-rotation unit 120. Accordingly, the tape-tail-finding-member 132 of the tape-tail-finding unit 130 may be positioned along a second radius (or second radial line) extending perpendicularly from the component rotational axis 121 of the rotary component 122. The second radius and the first radius may be spaced angularly apart from each other with respect to the component rotational axis 121 of the rotary component 122, whereby the second radius and the first radius meet at component rotational axis 121 and form an angle between the second radius and the first radius. Hence, the tape-tail-finding-member 132 of the tape-tail-finding unit 130 and the force applicator 126 of the tape-tail-lifting unit 124 may be spaced angularly apart from each other with respect to the component rotational axis 121 of the rotary component 122. According to various embodiments, the tape-tail-finding-member 132 may have a tape contact surface 132a. The tape contact surface 132a of the tape-tail-finding-member 132 may be capable of intercepting the first tail end portion 108c of the tape 108 of the lens mold assembly 102, which is lifted by the tape-tail-lifting unit 124, as the lens mold assembly 102 is being rotated on the rotary component 122 of the lens-mold-assembly-rotation unit 120. Accordingly, the tape contact surface 132a may serve as a catchment area for coming into contact or striking or catching the lifted or opened first tail end portion 108c of the tape 108 of the lens mold assembly 102 when the lens mold assembly 102 is rotated by the rotary component 122 of the lens-mold-assembly-rotation unit 120 to bring the first tail end portion 108c of the tape 108 of the lens mold assembly 102 to the tape-tail-finding-member 132. According to various embodiments, the second radial position (which the tape-tail-finding-member 132 is disposed) may be of a pre-determined distance away from the component rotational axis 121 of the rotary component 122, whereby the tape-tail-finding-member 132 at the second radial position may be spaced from the circumferential surface 109 of the tape 108 by a distance sufficient to intercept the lifted or opened first tail end portion 108c of the tape 108. According to an implementation, at the second radial position, a tip of the tape-tail-finding-member 132 may be at least 0.5mm, or between 0.5mm to 2 mm, or 0.5mm to 1.5mm, or 0.5mm to 1.0mm, from the circumferential surface 109 of the tape 108.

According to various embodiments, the tape-tail-finding unit 130 may include a sensing arrangement 134. The sensing arrangement 134 may be disposed in relation to the tape-tail-finding-member 132. Accordingly, the sensing arrangement 134 may be placed or positioned relative to the positioning of the tape-tail-finding-member 132. Further, the sensing arrangement 134 may be configured to detect whether the first tail end portion 108c of the tape 108 is in contact with the tape contact surface 132a of the tape-tail-finding-member 132. In other words, the sensing arrangement 134 may be associated with the tape-tail-finding-member 132 for detecting a presence of the first tail end portion 108c of the tape 108 on the tape contact surface 132a of the tape-tail-finding-member 132. According to some embodiments, the sensing arrangement 134 may be disposed at the tape-tail-finding-member 132. For example, according to an implementation, the sensing arrangement 134 may be disposed at the tape contact surface 132a of the tape-tail-finding-member 132 or the sensing arrangement 134 may be built in with the tape-tail-finding-member 132. According to various embodiments, the sensing arrangement 134 may include one or more sensing elements capable of detecting presence of the first tail end portion 108c of the tape 108 on the tape contact surface 132a of the tape-tail-finding-member 132. According to some embodiments, the sensing arrangement 134 may include one or more optical sensors, contact sensors, or proximity sensors.

According to various embodiments, the lens-mold-assembly-rotation unit 120 may be configured to stop the rotary component 122 from rotating based on the sensing arrangement 134 of the tape-tail-finding unit 130 detecting the first tail end portion 108c of the tape 108 is in contact with the tape contact surface 132a of the tape-tail-finding-member 132 of the tape-tail-finding unit 130. Hence, the rotary component 122 of the lens-mold-assembly-rotation unit 120 may be controlled to cease rotation about the component rotational axis 121 of the rotary component 122 when the sensing arrangement 134 of the tape-tail-finding unit 130 determines that the first tail end portion 108c of the tape 108 is in contact with the tape contact surface 132a of the tape-tail-finding-member 132 of the tape-tail-finding unit 130. Thus, after the first tail end portion 108c of the tape 108 is lifted or opened as the lens mold assembly 102 is rotated by the rotary component 122 of the lens-mold-assembly-rotation unit 120, the rotary component 122 may continue to rotate the lens mold assembly 102 to bring the lifted first tail end portion 108c of the tape 108 into contact with the tape contact surface 132a of the tape-tail-finding-member 132, and the rotation of the rotary component 122 of the lens-mold-assembly-rotation unit 120 may stop or halt upon the detecting the first tail end portion 108c of the tape 108 is in contact with the tape contact surface 132a of the tape-tail-finding-member 132. According to various embodiments, the sensing arrangement 134 of the tape-tail-finding unit 130 may generate a detection signal when the sensing arrangement 134 senses that the first tail end portion 108c of the tape 108 is in contact with the tape contact surface 132a of the tape-tail-finding-member 132. In response to the detection signal generated by the sensing arrangement 134 of the tape-tail-finding unit 130, the lens-mold-assembly-rotation unit 120 may control the rotary component 122 to cease rotation. Hence, the lens-mold-assembly-rotation unit 120 and the sensing arrangement 134 may work in a cooperative manner to stop the rotation of the rotary component 122.

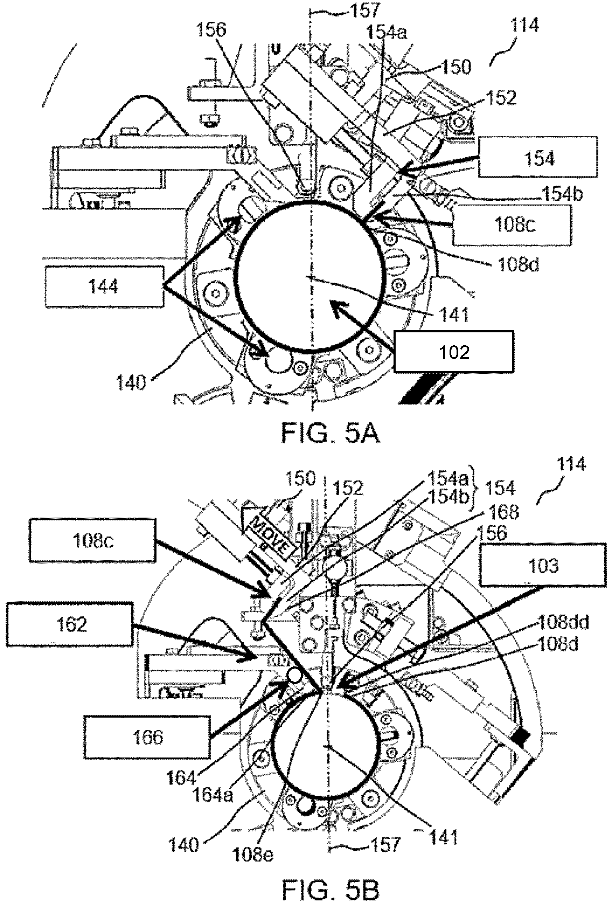

According to various embodiments, the tape-tail-finding-member 132 of the tape-tail-finding unit 130 may be disposed such that the first tail-end portion 108c of the tape 108 may be at a pre-designated position (or pre-designated radial position) with respect to the component rotational axis 121 of the rotary component 122 in preparation for transferring to the filling workstation 112 when the rotation of the rotary component 122 is stopped upon the sensing arrangement 134 detecting the first tail-end portion 108c of the tape 108 is in contact with the tape contact surface 132a of the tape-tail-finding-member 132. Accordingly, the tape-tail-finding-member 132 may be disposed to stop the first tail-end portion 108c of the tape 108 at the pre-designated position with respect to the component rotational axis 121 of the rotary component 122. At the pre-designated position, the first tail-end portion 108c of the tape 108 may be pre-aligned to a certain component of the filling workstation 112 (for example, a tape opening unit 150 of the filling workstation 112, see FIG. 5A and FIG. 5B). Hence, the tape-tail-finding unit 130 and the lens-mold-assembly-rotation unit 120 may be operated cooperatively to set the first tail-end portion 108c of the tape 108 in preparation for transferring to the filling workstation 112.

According to various embodiments, the tape-tail-finding unit 130 may include a tape-tail-pusher 136. The tape-tail-pusher 136 may have a pusher tip 136a movable between an extended state and a retracted state with respect to the tape contact surface 132a of the tape-tail-finding-member 132. Accordingly, the pusher tip 136a of the tape-tail-pusher 136 may be retractably extendable from the tape-tail-finding-member 132 so as to be capable of extending and retracting relative to the tape contact surface 132a of the tape-tail-finding-member 132.

According to various embodiments, in the extended state, the pusher tip 136a may protrude from the tape contact surface 132a. With the pusher tip 136a protruding from the tape contact surface 132a, the pusher tip 136a may push back the first tail end portion 108c of the tape 108 of the lens mold assembly 102 from the tape contact surface 132a of the tape-tail-finding-member 132. Accordingly, the first tail end portion 108c of the tape 108 of the lens mold assembly 102 may be bent or folded backwards away from the tape contact surface 132a of the tape-tail-finding-member 132 when the pusher tip 136a of the tape-tail-pusher 136 is extended or protruded relative to the tape contact surface 132a of the tape-tail-finding-member 132. With the first tail end portion 108c of the tape 108 bent or folded, transferring of the lens mold assembly 102 may be at ease or may be smoother for filling operation at the filling workstation 112. According to various embodiments, an extension direction of the pusher tip 136a of the tape-tail-pusher 136 may be for bending or folding the first tail end portion 108c of the tape 108 of the lens mold assembly 102 backwards towards the circumferential surface 109 of the tape 108. For example, according to an implementation, the extension direction may coincide or may be parallel with a tangent of a point along the circumferential surface 109 of the tape 108 behind the first tail end portion 108c of the tape 108 of the lens mold assembly 102.

According to various embodiments, in the retracted state, the pusher tip 136a may be withdrawn or retreated from being protruding from the tape contact surface 132a of the tape-tail-finding-member 132. For example, the tape contact surface 132a of the tape-tail-finding-member 132 may include a recess 132b. The pusher tip 136a of the tape-tail-pusher 136 may be retracted into the recess 132b when the pusher tip 136a is in the retracted state. According to various embodiments, the recess 132b of the tape contact surface 132a of the tape-tail-finding-member 132 may have a receding profile corresponding (or complimentary) to a shape of the pusher tip 136a of the tape-tail-pusher 136. According to various embodiments, the receding profile of the recess 132b may be capable of fully receiving the pusher tip 136a such that the pusher tip 136a may be fully withdrawn or retreated into the recess 132b without any portion of the pusher tip 136a protruding from the tape contact surface 132a of the tape-tail-finding-member 132.

According to various embodiments, the tape-tail-pusher 136 may be movable relative to the tape contact surface 132a of the tape-tail-finding-member 132 for extending or retracting the pusher tip 136a of the tape-tail-pusher 136. According to various embodiments, the tape-tail-finding unit 130 may include a pusher actuator to drive or actuate the tape-tail-pusher 136 for extending or retracting the pusher tip 136a of the tape-tail-pusher 136. According to various embodiments, the pusher actuator may include a linear actuator, for example a mechanical linear actuator, an electro-mechanical linear actuator, a hydraulic linear actuator, a pneumatic linear actuator, or a piezoelectric linear actuator. According to an implementation, the tape-tail-finding unit 130 may include a pneumatic linear actuator (e.g., a pneumatic cylinder) serving as the pusher actuator. According to various embodiments, the pusher actuator of the tape-tail-finding unit 130 may be controlled to move the pusher tip 136a of the tape-tail-pusher 136.

According to various embodiments, the tape-tail-finding-member 132 of the tape-tail-finding unit 130 may be moveable relative to the lens-mold-assembly-rotation unit 120. According to various embodiments, the tape-tail-finding-member member 132 of the tape-tail-finding unit 130 may be movable between a withdrawn position and the second radial position with respect to the component rotational axis 121 of the rotary component 122 of the lens-mold-assembly-rotation unit 120. For example, when the lens mold assembly 102 is provided to the rotary component 122 of the lens-mold-assembly-rotation unit 120 so as to be held by the rotary component 122, the tape-tail-finding-member member 132 of the tape-tail-finding unit 130 may be controlled to move from the withdrawn position to the second radial position so as to be in position (or be ready or be on standby) for coming into contact or striking or catching the lifted or opened first tail end portion 108c of the tape 108 of the lens mold assembly 102 as the lens mold assembly 102 is rotated by the rotary component 122. According to various embodiments, the second radial position with respect to the component rotational axis 121 of the rotary component 122 may be different for lens mold assembly 102 having different size and/or diameter. Accordingly, the tape-tail-finding-member member 132 of the tape-tail-finding unit 130 may be moved to the second radial position according to the size and/or diameter of the lens mold assembly 102. Further, when lens mold assembly 102 is changed to another one having a different size and/or diameter, the tape-tail-finding-member member 132 of the tape-tail-finding unit 130 may be moved accordingly. According to various embodiments, the tape-tail-finding unit 130 may include drive mechanism to move or drive the movement of the tape-tail-finding-member 132 relative to the lens-mold-assembly-rotation unit 120. Accordingly, the tape-tail-finding-member member 132 of the tape-tail-finding unit 130 may be moved between a withdrawn position and the second radial position and/or moved according to the size and/or diameter of the lens mold assembly 102 by controlling the drive mechanism of the tape-tail-finding unit 130.

Referring to FIG. 4, step 1 to step 4 illustrate the operation of the pre-filling workstation 114 to prepare the lens mold assembly 102 for transfer whereby the first tail-end portion 108c of the tape 108 is set in the pre-determined disposition apart from the second tail-end portion 108d of the tape 108. As shown, in step 1, the lens mold assembly 102 may be rotated by the rotary component 122 of the lens-mold-assembly-rotation unit 120 while the force applicator 126 of the tape-tail-lifting unit 124, which is at the first radial position with respect to the component rotational axis 121 of the rotary component 122, may be applying the force to graze the circumferential surface 109 of the tape 108 around the rotating lens mold assembly 102. As the first tail-end portion 108c of the tape 108 of lens mold assembly 102 is being rotated to be brought into the line of action of the force from the force applicator 126, the force from the by the force applicator 126 of the tape-tail-lifting unit 124 may lift or open the first tail-end portion 108c of the tape 108 away from the second tail-end portion 108d of the tape 108. In step 2, after the first tail-end portion 108c of the tape 108 is lifted or opened, the rotary component 122 of the lens-mold-assembly-rotation unit 120 may continue to rotate the lens mold assembly 102. As shown in step 3, the tape-tail-finding-member 132 of the tape-tail-finding unit 130 may be moved to the second radial position with respect to the component rotational axis 121 of the rotary component 122. The lens mold assembly 102 may continue to be rotated by the rotary component 122 of the lens-mold-assembly-rotation unit 120 such that the first tail-end portion 108c of the tape 108 may come into contact with the tape-tail-finding-member 132 of the tape-tail-finding unit 130. When the first tail-end portion 108c of the tape 108 is in contact with the tape-tail-finding-member 132, the sensing arrangement 134 of the tape-tail-finding unit 130 may detect the presence of the first tail-end portion 108c of the tape 108 in contact with the tape contact surface 132a of the tape-tail-finding-member 132. With the first tail-end portion 108c of the tape 108 in contact with the tape contact surface 132a of the tape-tail-finding-member 132 being sensed by the sensing arrangement 134 of the tape-tail-finding unit 130, the rotary component 122 of the lens-mold-assembly-rotation unit 120 may stop or halt or cease rotation such that the first tail-end portion 108c of the tape 108 may remain in contact with the tape contact surface 132a of the tape-tail-finding-member 132. In step 4, tape-tail-pusher 136 may then be moved relative to the tape contact surface 132a of the tape-tail-finding-member 132 for extending the pusher tip 136a of the tape-tail-pusher 136 to push against the first tail-end portion 108c of the tape 108 backwards so as to bend or fold the first tail end portion 108c of the tape 108 of the lens mold assembly 102, thereby setting the first tail end portion 108c of the tape 108 in the pre-determined disposition apart from the second tail-end portion 108d in preparation for transfer to the filling workstation 112.

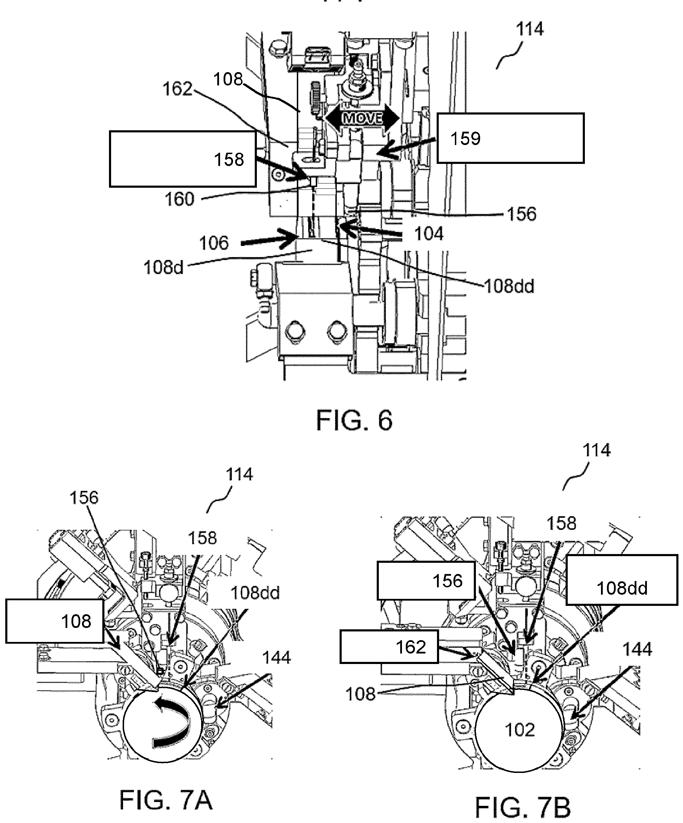

FIG. 5A and FIG. 5B show a sequence of the filling workstation 112 opening a filling window 103 in the lens mold assembly 102 according to various embodiments. FIG. 6 shows a perspective side view of the filling workstation 112 according to various embodiments. FIG. 7A and FIG. 7B show a sequence of fine adjustment of a size of the filling window 103 according to various embodiments.

According to various embodiments, the filling workstation 112 may include a lens-mold-assembly holder 140. The lens-mold-assembly holder 140 may have a holder axis 141 and may be operable to hold the lens mold assembly 102 with the holder axis 141 extending through the center of the first mold part 104 and the center of the second mold part 106 of the lens mold assembly 102. Accordingly, the lens mold assembly 102 may be held by the lens-mold-assembly holder 140 in a manner such that the holder axis 141 of the lens-mold-assembly holder 140 passes through the center of the first mold part 104 of the lens mold assembly 102 and the center of the second mold part 106 of the lens mold assembly 102. The holder axis 141 may be a central axis passing through a center of the lens-mold-assembly holder 140. Hence, the lens-mold-assembly holder 140 may hold the lens mold assembly 102 in a concentric manner.

According to various embodiments, the filling workstation 112 may include a tape opening unit 150. The tape opening unit 150 may include a gripping sub-unit 152 having a gripper 154. The gripper 154 of the gripping sub-unit 152 may be disposed relative to the lens-mold-assembly holder 140 to hold the first tail-end portion 108c of the tape 108 of the lens mold assembly 102 when the lens mold assembly 102 is transferred from the pre-filling workstation 114 to the filling workstation 112. Since the first tail-end portion 108c of the tape 108 is set at the pre-determined disposition by the pre-filling workstation 114, there may be ease of transferring the first tail-end portion 108c of the tape 108 of the lens mold assembly 102 to the gripper 154 of the gripping sub-unit 152 when transferring the lens mold assembly 102 to the lens-mold-assembly holder 140 of the filling workstation 112. According to various embodiments, a disposition of the gripper 154 of the gripping sub-unit 152 with respect to the lens-mold-assembly holder 140 may correspond to the pre-determined disposition of the first tail-end portion 108c of the tape 108 of the lens mold assembly 102 with respect to the lens mold assembly 102 when the lens mold assembly 102 is transferred to the lens-mold-assembly holder 140 of the filling workstation 112. Hence, the gripper 154 of the gripping sub-unit 152 may directly receive the first tail-end portion 108c of the tape 108 as the lens mold assembly 102 is transferred to the lens-mold-assembly holder 140 of the filling workstation 112. According to various embodiments, the gripper 154 of the gripping sub-unit 152 may be configured to grasp or clamp or clasp the first tail-end portion 108c of the tape 108.

According to various embodiments, the gripper 154 of the gripping sub-unit 152 may be movable between a first position proximal to the lens-mold-assembly holder 140 and a second position distal from the lens-mold-assembly holder 140. The first position proximal to the lens-mold-assembly holder 140 may correspond to the pre-determined disposition of the first tail-end portion 108c of the tape 108 of the lens mold assembly 102 with respect to the lens mold assembly 102 when the lens mold assembly 102 is transferred to the lens-mold-assembly holder 140 of the filling workstation 112 such that the gripper 154 of the gripping sub-unit 152 may receive the first tail-end portion 108c of the tape 108 as the lens mold assembly 102 is transferred to the lens-mold-assembly holder 140. Hence, the first position may be immediately adjacent or next to a border of the lens-mold-assembly holder 140. On the other hand, the second position distal may be situated away by a distance or further from the from the border of the lens-mold-assembly holder 140. According to various embodiments, with the first tail-end portion 108c of the tape 108 of the lens mold assembly 102 held by the gripper 154 of the gripping sub-unit 152 lens-mold-assembly holder 140, moving the gripper 154 of the gripping sub-unit 152 from the first position proximal to the lens-mold-assembly holder 140 to the second position distal from the lens-mold-assembly holder 140 may pull the first tail-end portion 108c of the tape 108 of the lens mold assembly 102 to open away from the second tail-end portion 108d of the tape 108 of the lens mold assembly 102. By pulling the first tail-end portion 108c of the tape 108 of the lens mold assembly 102, the tape 108 may open away from the lens mold assembly 102 (e.g., the first mold part 104 and the second mold part 106 of the lens mold assembly 102) such that the tape 108 may create or open up the filling window 103 for filling the molding cavity 105 of the lens mold assembly 102.

According to various embodiments, the gripping sub-unit 152 may include a gripper movement actuator configured to move the gripper 154 of the gripping sub-unit 152 between the first position proximal to the lens-mold-assembly holder 140 and the second position distal from the lens-mold-assembly holder 140. Accordingly, the gripper movement actuator may be controlled to move gripper 154 of the gripping sub-unit 152 between the first position and the second position. According to various embodiments, the gripper movement actuator may include a linear actuator including, but not limited to, a mechanical linear actuator, an electro-mechanical linear actuator, a hydraulic linear actuator, a pneumatic linear actuator, or a piezoelectric linear actuator. According to an implementation, the gripper movement actuator may include a linear servo.

According to various embodiments, the filling workstation 112 may further include a filling nozzle 156 having a nozzle axis 157. The nozzle axis 157 may be a centreline of projection of fluid exiting from the filling nozzle 156. According to various embodiments, the filling nozzle 156 may be oriented with the nozzle axis 157 being perpendicular to the holder axis 141 of the lens-mold-assembly holder 140. Accordingly, the filling nozzle 156 may be directed along a radial direction towards the holder axis 141 of the lens-mold-assembly holder 140. Hence, when the lens mold assembly 102 is held by the lens-mold-assembly holder 140, the filling nozzle 156 may be directed towards a circumferential side of the lens-mold-assembly holder 140.

According to various embodiments, the filling workstation 112 may further include an alignment arrangement 158. The alignment arrangement 158 may include at least one sensor 160. According to various embodiments, the at least one sensor 160 of the alignment arrangement 158 may be fixedly disposed relative to the filling nozzle 156. Accordingly, the at least one sensor 160 of the alignment arrangement 158 may be fixed spatially with respect to the filling nozzle 156 such that the at least one sensor 160 is non-movable relative to the filling nozzle 156. For example, according to an implementation, the at least one sensor 160 may be fixedly attached to the filling nozzle 156, or the at least one sensor 160 and the filling nozzle 156 may be fixedly attached to a common frame 159 such that the at least one sensor 160 and the filling nozzle 156 may be fixed relative to each other.

According to various embodiments, the at least one sensor 160 of the alignment arrangement 158 may be configured to detect an end edge 108dd of the second tail-end portion 108d of the tape 108 when the first tail-end portion 108c of the tape 108 is opened or pulled away from the second tail-end portion 108d of the tape 108 by the gripper 154 of the gripping sub-unit 152. When the first tail-end portion 108c of the tape 108 opens away from the second tail-end portion 108d of the tape 108, the end edge 108dd of the second tail-end portion 108d of the tape 108 may be exposed such that the at least one sensor 160 may be used to detect the end edge 108dd of the second tail-end portion 108d of the tape 108. According to various embodiments, the at least one sensor 160 may be directed in a direction parallel to the nozzle axis 157 of the filling nozzle 156. Further, the at least one sensor 160 may be laterally offset from the nozzle axis 157 of the filling nozzle 156. Accordingly, by using the at least one sensor 160 of the alignment arrangement 158, it may be determined whether the end edge 108dd of the second tail-end portion 108d of the tape 108 is aligned to the at least one sensor 160 as a measure of determining a relative alignment of the filling nozzle 156 with respect to the end edge 108dd of the second tail-end portion 108d of the tape 108.

According to various embodiments, the lens-mold-assembly holder 140 may be rotatable about the holder axis 141. According to various embodiments, the lens-mold-assembly holder 140 may be operable to hold and rotate the lens mold assembly 102 with the holder axis 141 extending through the center of the first mold part 104 of the lens mold assembly 102 and the center of the second mold part 106 of the lens mold assembly 102. Accordingly, with the lens mold assembly 102 held by the lens-mold-assembly holder 140, the lens mold assembly 102 may be rotated about the holder axis 141 as the lens-mold-assembly holder 140 rotates about the holder axis 141. Hence, the lens-mold-assembly holder 140 may be rotated to rotate the lens mold assembly 102. According to various embodiments, the filling workstation 112 may include a motor for driving the rotation of the lens-mold-assembly holder 140. According to an implementation, the motor may be a servo motor.

According to various embodiments, when the first tail-end portion 108c of the tape 108 is opened away from the second tail-end portion 108d of the tape 108 by the gripper 154, the lens-mold-assembly holder 140 may be operable cooperatively with the alignment arrangement 158 to rotate the lens mold assembly 102 about the holder axis 141 based on feedback from the at least one sensor 160 of the alignment arrangement 158 to align the end edge 108dd of the second tail-end portion 108d of the tape 108 to a pre-set position so as to orient the lens mold assembly 102 into a pre-determined orientation for filling of the liquid molding material. According to various embodiments, with the end edge 108dd of the second tail-end portion 108d of the tape 108 exposed after the gripper 154 pulls the first tail-end portion 108c of the tape 108 away from the second tail-end portion 108d of the tape 108, the lens-mold-assembly holder 140 may be rotated to rotate the lens mold assembly 102 according to whether the end edge 108dd of the second tail-end portion 108d of the tape 108 is detected, by the at least one sensor 160 of the alignment arrangement 158, to be aligned to the pre-set position. When the at least one sensor 160 of the alignment arrangement 158 detects that the end edge 108dd of the second tail-end portion 108d of the tape 108 is in non-alignment with the pre-set position, the lens-mold-assembly holder 140 may be controlled to rotate either clockwise and/or anticlockwise so as to move the end edge 108dd of the second tail-end portion 108d of the tape 108 towards the pre-set position. When the at least one sensor 160 of the alignment arrangement 158 detects that the end edge 108dd of the second tail-end portion 108d of the tape 108 is in alignment with the pre-set position, the lens-mold-assembly holder 140 may be controlled to stop any rotation and to hold its position in order to maintain the end edge 108dd of the second tail-end portion 108d of the tape 108 in alignment with the pre-set position. Thus, the motor for driving the rotation of the lens-mold-assembly holder 140 may be controlled in response to the feedback from the at least one sensor 160 of the alignment arrangement 158 so as to rotate the lens-mold-assembly holder 140 for rotating the lens mold assembly 102 to align the end edge 108dd of the second tail-end portion 108d of the tape 108 is in non-alignment to the pre-set position. According to various embodiments, when the end edge 108dd of the second tail-end portion 108d of the tape 108 is in alignment with the pre-set position, the lens mold assembly 102 may be in the pre-determined orientation for filling the liquid molding material, whereby the filling window 103 of the lens mold assembly 102 is aligned to the filling nozzle 156.

According to various embodiments, the filling workstation 112 may further include a tape engagement unit 162. The tape engagement unit 162 may include an engagement blade 164. The engagement blade 164 may be disposed at a radial position from the holder axis 141 of the lens-mold-assembly holder 140. Accordingly, the engagement blade 164 of the tape engagement unit 162 may be positioned along a radius (or radial line) extending perpendicularly from the holder axis 141 of the lens-mold-assembly holder 140. When the lens mold assembly 102 is being held by the lens-mold-assembly holder 140, a tip 164a of the engagement blade 164 may abut the tape 108 of the lens mold assembly 102. According to an implementation, the engagement blade 164 may be a flat tool with a tapered edge at the tip 164a thereof.

According to various embodiments, when the gripper 154 is moved to the second position for pulling the first tail-end 108c of the tape 108 to open away from the second tail-end 108d of the tape 108, the tape 108 may be rested against the tip 164a of the engagement blade 164 of the tape engagement unit 162 and bent by the tip 164a of the engagement blade 164 of the tape engagement unit 162 to form a fold 108e. Accordingly, the gripper 154 pulling the first tail-end 108c of the tape 108 away from the second tail-end 108d of the tape 108 may cause the tape 108 to drape or wrap over the tip 164a of the engagement blade 164 of the tape engagement unit 162 such that the tape 108 conforms to a profile of the tip 164a of the engagement blade 164 so as to bend and fold the tape 108 resulting in the fold 108e being formed at the tip 164a of the engagement blade 164. Hence, with the engagement blade 164 of the tape engagement unit 162, the tape 108 may be opened in a predictable and controllable manner when the gripper 154 pulls the first tail-end 108c of the tape 108 to open away from the second tail-end 108d of the tape 108.

According to various embodiments, a gap between the fold 108e of the tape 108 formed at the tip 164a of the engagement blade 164 and the end edge 108dd of the second tail-end portion 108d of the tape 108 may define the filling window 103. Accordingly, the filling window 103 created or opened up by pulling, via the gripper 154, the first tail-end portion 108c of the tape 108 of the lens mold assembly 102 to open away from the second tail-end portion 108d of the tape 108 may be bound by the fold 108e of the tape 108 formed at the tip 164a of the engagement blade 164 and the end edge 108dd of the second tail-end portion 108d of the tape 108.

According to various embodiments, when the end edge 108dd of the second tail-end portion 108d of the tape 108 is at the pre-set position such that the lens mold assembly 102 is in the pre-determined orientation, the filling window 103 defined by the gap between the fold 108e of the tape 108 formed at the tip 164a of the engagement blade 164 and the end edge 108dd of the second tail-end portion 108d of the tape 108 may have a pre-determined arc length. The filling window 103 with the pre-determined arc-length may be achieved repeatedly by the filling workstation 112 based on the cooperation between the lens-mold-assembly holder 140 and the alignment arrangement 158 to ensure that the lens mold assembly 102 is rotated until the end edge 108dd of the second tail-end portion 108d of the tape 108 is at the pre-set position and with the tip 164a of the engagement blade 164 being fixed relative to the pre-set position. Accordingly, consistent size for the filling window 103 may be achieved by the filling workstation 112. The consistent size for the filling window 103 may ensure the filling nozzle 158 may be within the filling window 103 and may also enable consistent filling of liquid molding material to achieve consistency in the lens being molded.

According to various embodiments, during rotation of the lens mold assembly 102 by the lens-mold-assembly holder 140 for aligning the end edge 108dd of the second tail-end portion 108d of the tape 108 to the pre-set position, the tape 108 may slide over the tip 164a of the engagement blade 164 to reseal or to open up the tape 108 with respect to the first mold part 104 and the second mold part 106. Accordingly, the sliding of the tape 108 relative to the tip 164a of the engagement blade 164 may enable adjustment of the size of the filling window 103 as the lens-mold-assembly holder 140 rotates the lens mold assembly 102 to align the end edge 108dd of the second tail-end portion 108d of the tape 108 to the pre-set position based on feedback from the at least one sensor 160 of the alignment arrangement 158.

According to various embodiments, the filling nozzle 156 may be located between the engagement blade 164 of the tape engagement unit 162 and the at least one sensor 160 of the alignment arrangement 158. Accordingly, the engagement blade 164 may be on one side of the filling nozzle 156 and the at least one sensor 160 may be on an opposite side of the filling nozzle 156. Since the filling window 103 is defined between the fold 108e of the tape 108 formed at the tip 164a of the engagement blade 164 and the end edge 108dd of the second tail-end portion 108d of the tape 108 to be detected by the at least one sensor 160 of the alignment arrangement 158, the filling nozzle 156 being between the engagement blade 164 and the at least one sensor 160 may ensure that the filling nozzle 156 may be within the filling window 103.

According to various embodiments, the tape engagement unit 162 may further include a tape immobilizing arrangement 166. The tape immobilizing arrangement 166 may be configured to adhere the tape 108 to the engagement blade 164 so as to hold the tape 108 in place. With the tape 108 held in place, slipping of the tape 108 may be prevented such that the fold 108e of the tape 108 formed at the tip 164a of the engagement blade 164 is maintained throughout the filling of the liquid molding material as well as during adjustment of the size of the filling window 103. According to various embodiments, the tape immobilising arrangement 166 may include, but not limited to, a suction arrangement, a friction arrangement, an adhesive arrangement, or a fastening arrangement. According to an implementation, the tape immobilising arrangement 166 may include vacuum suction. According to various embodiments, the tape engagement unit 162 may further include a tape sensing element to detect that the tape 108 is rested against the tip 164a of the engagement blade 164 of the tape engagement unit 162 during filling of the liquid molding material. According to various embodiments, the tape sensing element may include, but not limited to, optical sensor, contact sensor or proximity sensor. According to various embodiments, the tape sensing element may be disposed at the engagement blade 164 of the tape engagement unit 162.

According to various embodiments, the filling nozzle 156 and the at least one sensor 160 of the alignment arrangement 158 may be moveable together between a stowed position and an operative position along a movement axis. According to various embodiments, the movement axis may be parallel to the holder axis 141 of the lens-mold-assembly holder 140. Accordingly, the filling nozzle 156 and the at least one sensor 160 of the alignment arrangement 158 may be movable along the movement axis corresponding to a thickness direction of the lens mold assembly 102 held by the lens-mold-assembly holder 140. According to various embodiments, the operative position along the movement axis may correspond to a position along the holder axis 141 between the first mold part 104 and the second mold part 106 when the lens mold assembly 102 is held by the lens-mold-assembly holder 140. According to various embodiments, the stowed position along the movement axis may correspond to a position along the holder axis 141 outside the lens mold assembly 102 when the lens mold assembly 102 is held by the lens-mold-assembly holder 140. According to various embodiments, in the operative position, the filling nozzle 156 and the at least one sensor 160 may correspondingly be aligned within the first mold part 104 and the second mold part 106 along the thickness direction of the lens mold assembly 102. Accordingly, in the operative position, the at least one sensor 160 of the alignment arrangement 158 may be operable to detect whether the end edge 108dd of the second tail-end portion 108d of the tape 108 is aligned to the pre-set position. In the operative position, the filling nozzle 156 may also be operable to fill the molding cavity 105 between the first mold part 104 and the second mold part 106 of the lens mold assembly 102.

According to various embodiments, the operative position may differ between lens mold assembly 102 of different size and/or thickness. According to various embodiments, the operative position for different lens mold assemblies may be stored in a database. Depending on the lens mold assembly 102 to be filled by the filling workstation 112, the operative position corresponding to the lens mold assembly 102 may be retrieved from the database for controlling the movement between the stowed position and the operative position along the movement axis.

According to various embodiments, the filling workstation 112 may include a nozzle actuator to drive or actuate the filling nozzle 156 and the at least one sensor 160 of the alignment arrangement 158 together to move between the stowed position and the operative position along the movement axis. According to various embodiments, the nozzle actuator may include a linear actuator, for example a mechanical linear actuator, an electro-mechanical linear actuator, a hydraulic linear actuator, a pneumatic linear actuator, or a piezoelectric linear actuator. According to an implementation, a liner servo may drive or move the filling nozzle 156 and the at least one sensor 160 in a synchronous manner. According to various embodiments, the nozzle actuator may be controlled to move the filling nozzle 156 and the at least one sensor 160 of the alignment arrangement 158 together along the movement axis.

According to various embodiments, the gripper 154 of the g ripping sub-unit 152 of the tape opening unit 150 may include a pair of gripping jaws 154a, 154b. The pair of gripping jaws 154a, 154b may be operable to open and close for clamping the first tail-end portion 108c of the tape 108 of the lens mold assembly 102. The pair of gripping jaws 154a, 154b may be opened for insertion and/removal of the first tail-end portion 108c of the tape 108 of the lens mold assembly 102. The pair of gripping jaws 154a, 154b may be closed for holding the first tail-end portion 108c of the tape 108 of the lens mold assembly 102. According to various embodiments, when the lens mold assembly 102 is being transferred to the lens-mold-assembly holder 140 of the filling workstation 112, the pair of gripping jaws 154a, 154b may be opened such that the first tail-end portion 108c of the tape 108 may be slotted or inserted between the pair of gripping jaws 154a, 154b of the gripper 154. Subsequently, the pair of gripping jaws 154a, 154b may be closed to hold the first tail-end portion 108c of the tape 108 as the lens mold assembly 102 is held by the lens-mold-assembly holder 140.

According to various embodiments, the gripping sub-unit 152 of the tape opening unit 150 may include a jaw actuator to drive or actuate the pair of gripping jaws 154a, 154b to open or close. According to various embodiments, the jaw actuator may include a linear actuator, for example a mechanical linear actuator, an electro-mechanical linear actuator, a hydraulic linear actuator, a pneumatic linear actuator, or a piezoelectric linear actuator. According to an implementation, the jaw actuator may include a pneumatic linear actuator (e.g., pneumatic cylinder) to drive or move the pair of gripping jaws 154a, 154b to open or close for clamping. According to various embodiments, the jaw actuator may be controlled to open or close the pair of gripping jaws 154a, 154b.

According to various embodiments, the gripping sub-unit 152 may include a tape-tail-sensing arrangement 168 associated with the gripper 154. The tape-tail-sensing arrangement 168 may be configured to detect whether the first tail end portion 108c of the tape 108 is in place for the gripper 154 to hold the first tail end portion 108c of the tape 108. For example, the tape-tail-sensing arrangement 168 may detect whether the first tail-end portion 108c of the tape 108 is slotted or inserted between the pair of gripping jaws 154a, 154b of the gripper 154. When the first tail-end portion 108c of the tape 108 is slotted or inserted between the pair of gripping jaws 154a, 154b of the gripper 154, the tape-tail-sensing arrangement 168 may determine that the first tail end portion 108c of the tape 108 is in place or ready or set up for the gripper 154 to hold the first tail end portion 108c of the tape 108.

According to various embodiments, the gripper 154 may be actuated to hold the first tail end portion 108c of the tape 108 when the tape-tail-sensing arrangement 168 detects that the first tail end portion 108c of the tape 108 is in place for the gripper 154 to hold the first tail end portion 108c of the tape 108. Accordingly, in response to the tape-tail-sensing arrangement 168 detecting the first tail-end portion 108c of the tape 108 is slotted or inserted between the pair of gripping jaws 154a, 154b of the gripper 154, the jaw actuator may be controlled to actuate the pair of gripping jaws 154a, 154b to close so as to clamp the first tail end portion 108c of the tape 108 in order for the gripper 154 to hold the first tail end portion 108c of the tape 108. Hence, the gripper 154 may be actuated based on an output signal of the tape-tail-sensing arrangement 168 in relation to whether the first tail-end portion 108c of the tape 108 is slotted or inserted between the pair of gripping jaws 154a, 154b of the gripper 154.

Referring back to FIG. 2, according to various embodiments, the machine 100 may include a transfer arrangement 116. The transfer arrangement 116 may be configured to transfer the lens mold assembly 102 from the pre-filling workstation 114 to the filling workstation 112. According to various embodiments, the transfer arrangement 116 may be capable of transferring the lens mold assembly 102 with the first tail-end portion 108c of the tape 108 in the pre-determined disposition from the pre-filling workstation 114 in a manner such that the first tail-end portion 108c of the tape 108 may be transferred over to the gripper 154 of the gripping sub-unit 152 of the tape opening unit 150 of the filling workstation 114 as the lens mold assembly 102 is transferred to the lens-mold-assembly holder 140. Accordingly, the transfer arrangement 116 may automate the transfer of the lens mold assembly 102 from the pre-filling workstation 114 to the filling workstation 112.

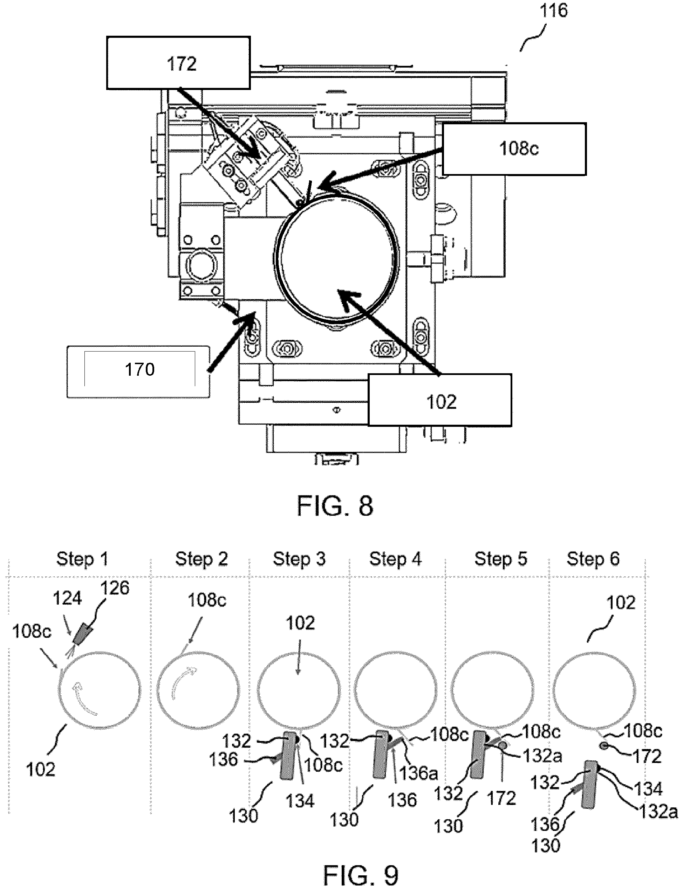

FIG. 8 shows the transfer arrangement 116 of machine 100 according to various embodiments. According to various embodiments, the transfer arrangement 116 may include a primary holder 170 (or an unfilled-mold-assembly holder). The primary holder 170 may be movable between the pre-filling workstation 114 and the filling workstation 112 for transferring the lens mold assembly 102 from the pre-filling workstation 114 to the filling workstation 112. Accordingly, the primary holder 170 may be configured to move or transfer the lens mold assembly 102 from the pre-filling workstation 114 to the filling workstation 112. According to various embodiments, the primary holder 170 may be operable to pick up the lens mold assembly 102 from the rotary component 122 of the lens-mold-assembly-rotation unit 120 of the pre-filling workstation 114 when the primary holder 170 is at the pre-filling workstation 114 and to release the lens mold assembly 102 to the lens-mold-assembly holder 140 of the filling workstation 112 when the primary holder 170 is at the filling workstation 112. Accordingly, the primary holder 170 may be moved to the pre-filling workstation 114 to interact with the lens mold assembly 102 while the lens mold assembly 102 is held by the rotary component 122 of the lens-mold-assembly-rotation unit 120 of the pre-filling workstation 114 for picking up the lens mold assembly 102. Further, the primary holder 170 may be moved from the pre-filling workstation 114 to the filling workstation 112 to interact with the lens-mold-assembly holder 140 of the filling workstation 112 for transferring or releasing the lens mold assembly 102 held by the primary holder 170 to the lens-mold-assembly holder 140 of the filling workstation 112. According to various embodiments, the primary holder 170 may include, but not limited to, a suction arrangement, a friction arrangement, an adhesive arrangement, or a fastening arrangement. According to an implementation, the primary holder 170 may include vacuum suction arrangement for holding the lens mold assembly 102.

According to various embodiments, the transfer arrangement 116 may include a tape-tail-retainer 172 associated with the primary holder 170. The tape-tail-retainer 172 may maintain the first tail-end portion 108c of the tape 108 of the lens mold assembly 102 in the pre-determined disposition when the lens mold assembly 102 is held by the primary holder 170. Accordingly, during transfer of the lens mold assembly 102, the tape-tail-retainer 172 and the primary holder 170 may function closely together to transfer the lens mold assembly 102 with the first tail-end portion 108c of the tape 108 in the pre-determined disposition from the pre-filling workstation 114 to the filling workstation 112. Hence, the primary holder 170 and the tape-tail-retainer 172 may be closely related and dependent on each other to jointly transfer the lens mold assembly 102 in a manner so as to effectively pass the first tail-end portion 108c of the tape 108 found by the pre-filling workstation 114 to the gripper 154 of the gripping sub-unit 152 of the tape opening unit 150 of the filling workstation 114 during the transfer. According to various embodiments, the tape-tail-retainer 172 may be disposed relative to the primary holder 170 to maintain the first tail-end portion 108c of the tape 108 of the lens mold assembly 102 in the lifted or opened state when the lens mold assembly 102 is held by the primary holder 170. Accordingly, a disposition of the tape-tail-retainer 172 with respect to the primary holder 170 may correspond to the pre-determined disposition of the first tail-end portion 108c of the tape 108 of the lens mold assembly 102 with respect to the lens mold assembly 102. Hence, the primary holder 170 and the tape-tail-retainer 172 may together transfer the lens mold assembly 102 along with the first tail-end portion 108c of the tape 108 in the pre-determined disposition as set by the pre-filling workstation 114.

According to various embodiments, when the primary holder 170 is picking up the lens mold assembly 102 from the pre-filling workstation 114, the tape-tail-retainer 172 may be inserted between the tape contact surface 132a of the tape-tail-finding-member 132 of the tape-tail-finding-unit 130 of the pre-filling workstation 114 and the first tail-end portion 108c of the tape 108 of the lens mold assembly 102 while the lens mold assembly 102 is still held by the rotary component 122 of the lens-mold-assembly-rotation unit 120 of the pre-filling workstation 112. In this manner, the primary holder 170 and the tape-tail-retainer 172 may jointly pick up the lens mold assembly 102 while maintaining the lifted or opened first tail-end portion 108c of the tape 108 intact. Accordingly, during the picking up process, the primary holder 170 and the tape-tail-retainer 172 of the transfer arrangement 116 may interact with the lens mold assembly 102 and the pre-filling workstation 114 such that the primary holder 170 engages the lens mold assembly 102 held by the rotary component 122 of the lens-mold-assembly-rotation unit 120 of the pre-filling workstation 112 and the tape-tail-retainer 172 is introduced in a coordinated manner to retain the first tail-end portion 108c of the tape 108 of the lens mold assembly 102 lifted or opened (i.e. to prevent the first tail-end portion 108c of the tape 108 of the lens mold assembly 102 from closing back on the second tail-end portion 108d of the tape 108). According to various embodiments, during the picking up process, the tape-tail-retainer 172 may be inserted or slotted or fitted between the tape contact surface 132a of the tape-tail-finding-member 132 of the tape-tail-finding-unit 130 of the pre-filling workstation 114 and the first tail-end portion 108c of the tape 108 of the lens mold assembly 102 for the first tail-end portion 108c of the tape 108 of the lens mold assembly 102 to abut or rest on due to a natural tendency of the first tail-end portion 108c of the tape 108 to close back towards the second tail-end portion 108d of the tape 108 after the pushing force from the pusher tip 136a of the tape-tail-pusher 136 of the pre-filling workstation 114 cease to push against the first tail-end portion 108c of the tape 108.

According to various embodiments, when the primary holder 170 releases the lens mold assembly 102 to the lens-mold-assembly holder 140 of the filling workstation 112, the tape-tail-retainer 172 may transfer the first tail-end portion 108c of the tape 108 of the lens mold assembly 102 in the pre-determined disposition to the gripper 154 of the gripping sub-unit 152 of the tape opening unit 150 of the filling workstation 112. In this manner, the primary holder 170 and the tape-tail-retainer 172 may jointly transfer the lens mold assembly 102 to the filling workstation 112 with the lifted or opened first tail-end portion 108c of the tape 108 intact. Accordingly, during the release process, the primary holder 170 and the tape-tail-retainer 172 of the transfer arrangement 116 may interact with the filling workstation 112 such that the lens mold assembly 102 held by the primary holder 170 is brought into engagement with the lens-mold-assembly holder 140 of the filling workstation 112 and the first tail-end portion 108c of the tape 108 of the lens mold assembly 102 is guided or directed by the tape-tail-retainer 172 to be inserted or slotted between the pair of gripping jaws 154a, 154b of the gripper 154 of the gripping sub-unit 152 of the tape opening unit 150 of the filling workstation 112.

Thus, the combination of the primary holder 170 and the tape-tail-retainer 172 of the of the transfer arrangement 116 may facilitate and enable the ease and effective transfer of the lens mold assembly 102 from the pre-filling workstation 114 to the filling workstation 112 with the first tail-end portion 108c of the tape 108 intact at the pre-determined disposition. The first tail-end portion 108c of the tape 108 of the lens mold assembly 102 may be found by the pre-filling workstation 114 and may be set in the pre-determined disposition by the pre-filling workstation 114. The transfer arrangement 116 may pick up the lens mold assembly 102 while keeping the first tail-end portion 108c of the tape 108 intact at the pre-determined disposition. The transfer arrangement 116 may then transfer the lens mold assembly 102 to the filling workstation 112 with the first tail-end portion 108c of the tape 108 transferred to the gripper 154 of the gripping sub-unit 152 of the tape opening unit 150 of the filling workstation 112, which may then pull the tape 108 to open the filling window 103 for filling of the liquid molding material. Accordingly, the process of finding a tape tail and to open a filling window in the lens molding assembly may be made efficient and completed with ease.

According to various embodiments, the tape-tail-retainer 172 may be deployable and retractable between a deployed position and a home position. Accordingly, the tape-tail-retainer 172 of the transfer arrangement 116 may be movable for deploying into the deployed position and retracting to return to the home position. In the deployed position, the tape-tail-retainer 172 may serve to maintain the first tail-end portion 108c of the tape 108 of the lens mold assembly 102 in the pre-determined disposition when the lens mold assembly 102 is held by the primary holder 170. In the home position, the tape-tail-retainer 172 may be withdrawn from interacting with the first tail-end portion 108c of the tape 108 of the lens mold assembly 102. According to various embodiments, the tape-tail-retainer 172 of the transfer arrangement 116 may be deployed to the deployed position when the primary holder 170 is picking up the lens mold assembly 102 from the rotary component 122 of the lens-mold-assembly-rotation unit 120 of the pre-filling workstation 114. Accordingly, the tape-tail-retainer 172 in the deployed position may maintain the lifted or opened first tail-end portion 108c of the tape 108 of the lens mold assembly 102 intact during pick up and during transfer by the transfer arrangement 116. According to various embodiments, the tape-tail-retainer 172 of the transfer arrangement 116 may be retracted to the home position when the first tail-end portion 108c of the tape 108 of the lens mold assembly 102 is transferred to the gripper 154 of the gripping sub-unit 152 of the tape opening unit 150 of the filling workstation 112. Accordingly, upon the gripper 154 of the gripping sub-unit 152 of the tape opening unit 150 of the filling workstation 112 receiving the first tail-end portion 108c of the tape 108 therein, the tape-tail-retainer 172 of the transfer arrangement 116 may be retracted to the home position to allow the gripper 154 of the gripping sub-unit 152 of the tape opening unit 150 of the filling workstation 112 to take over the first tail-end portion 108c of the tape 108 by gripping or clamping or clasping the first tail-end portion 108c of the tape 108. With the tape-tail-retainer 172 of the transfer arrangement 116 retracted, the tape-tail-retainer 172 may not obstruct or hinder the operation of the gripper 154 of the gripping sub-unit 152.

FIG. 9 shows a sequence of schematic diagrams illustrating the operations of the pre-filling workstation 114 and the interaction with the transfer arrangement 116 according to various embodiments. As shown, step 1 to step 4 are identical with step 1 to step 4 as described with reference to FIG. 4. In step 5, the transfer arrangement 116 may be moved in to pick up the lens mold assembly 102. As shown, during the picking up process, the tape-tail-retainer 172 of the transfer arrangement 116 may be inserted or slotted or fitted between the tape contact surface 132a of the tape-tail-finding-member 132 of the tape-tail-finding-unit 130 of the pre-filling workstation 114 and the first tail-end portion 108c of the tape 108 of the lens mold assembly 102. With the tape-tail-retainer 172 in place, the pusher tip 136a of the tape-tail-pusher 135 of the tape-tail-finding unit 130 may be retracted or withdrawn such that the first tail-end portion 108c of the tape 108 may abut or rest against the tape-tail-retainer 172 of the transfer arrangement 116. In step 6, with the lens mold assembly 102 held by the primary holder of the transfer arrangement 116 and the first tail-end portion 108c of the tape 108 maintained by the tape-tail-retainer 172 of the transfer arrangement 116, the lens mold assembly 102 is successfully picked up by the transfer arrangement 116 and may be moved away from the pre-filling workstation 114 and towards the filling workstation 112 for transferring to the filling workstation 112.

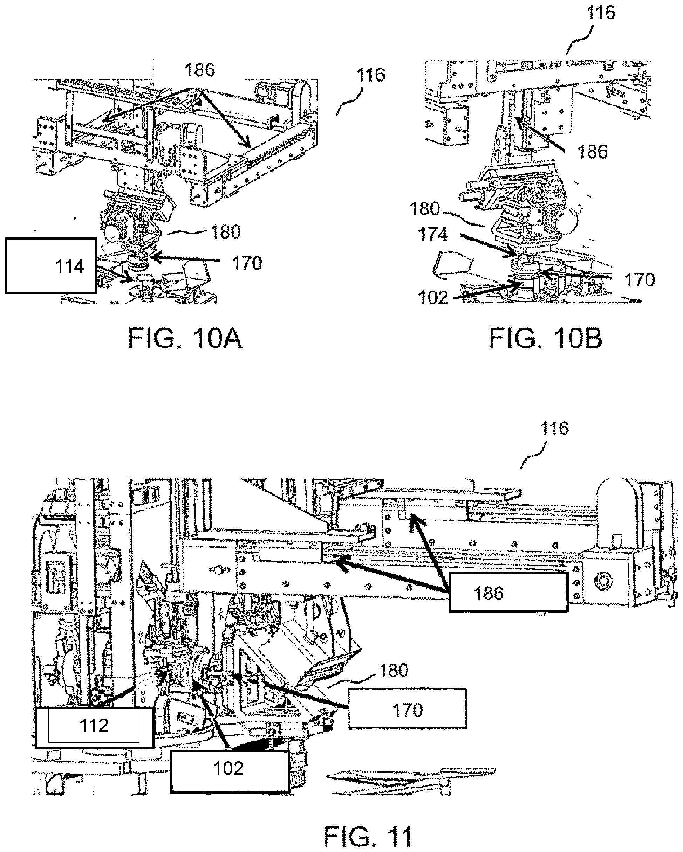

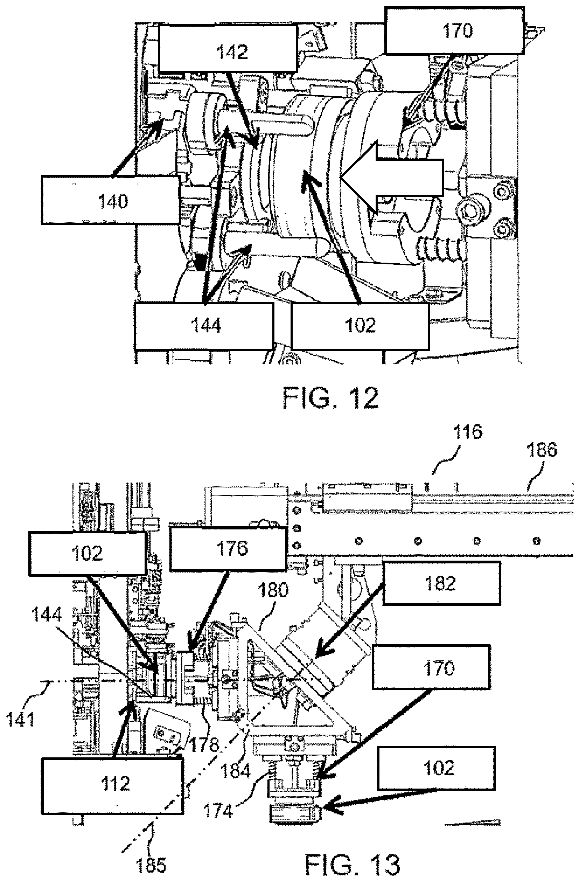

FIG. 10A and FIG. 10B show the transfer arrangement 116 picking up the lens mold assembly 102 from the pre-filling workstation 114 according to various embodiments. FIG. 11 shows the transfer arrangement 116 transferring the lens mold assembly 102 to the filling workstation 112 according to various embodiments. FIG. 12 shows a zoomed in view of the transfer of the lens mold assembly 102 from the transfer arrangement 116 to the filling workstation 112 according to various embodiments. FIG. 13 shows the transfer arrangement 116 unloading the lens mold assembly 102 from the filling workstation 112 according to various embodiments.

According to various embodiments, the primary holder 170 of the transfer arrangement 116 may be supported by a biasing member 174. The biasing member 174 may provide a soft engagement between the primary holder 170 and the lens mold assembly 102 when the primary holder 170 is picking up the lens mold assembly 102 from the pre-filling workstation 114. According to various embodiments, the biasing member 174 may provide a cushioning effect or a damping effect when the primary holder 170 is moved into engagement with the lens mold assembly 102 held by the rotary component 122 of the lens-mold-assembly-rotation unit 120 of the pre-filling workstation 114. According to an implementation, the biasing member 174 may include one or more springs, such as one or more coil springs.

According to various embodiments, the transfer arrangement 116 may be further configured to transfer the lens mold assembly 102 from the filling workstation 112 to an outbound conveyor after the lens mold assembly 102 is filled with the liquid molding material. According to various embodiments, the transfer arrangement 116 may include a secondary holder 176 (or a post-filled-assembly holder). The second holder 176 may be movable between the filling workstation 112 and the outbound conveyor for transferring the filled lens mold assembly 102 from the filling workstation 112 to the outbound conveyor. Accordingly, the secondary holder 176 may be configured to move or transfer the filled lens mold assembly 102 from the filling workstation 112 to the outbound conveyor. According to various embodiments, the secondary holder 176 may be operable to pick up the filled lens mold assembly 102 from the lens-mold-assembly holder 140 of the filling workstation 112 when the secondary holder 176 is at the filling workstation 112 and to release the lens mold assembly 102 to the outbound conveyor when the secondary holder 176 is at the outbound conveyor. Accordingly, the secondary holder 176 may be moved to the filling workstation 112 to interact with the filled lens mold assembly 102 while the lens mold assembly 102 is held by the lens-mold-assembly holder 140 of the filling workstation 112 of the filling workstation 112 for picking up the filled lens mold assembly 102. Further, the secondary holder 176 may be moved from the filling workstation 112 to the outbound conveyor for transferring or releasing the filled lens mold assembly 102 held by the secondary holder 176 to the outbound conveyor. According to various embodiments, the secondary holder 176 may include, but not limited to, a suction arrangement, a friction arrangement, an adhesive arrangement, or a fastening arrangement. According to an implementation, the secondary holder 176 may include vacuum suction arrangement for holding the lens mold assembly 102.

According to various embodiments, the secondary holder 176 of the transfer arrangement 116 may be supported by a biasing member 178. The biasing member 178 may provide a soft engagement between the second holder 176 and the filled lens mold assembly 102 when the secondary holder 176 is picking up the filled lens mold assembly 102 from the filling workstation 112. According to various embodiments, the biasing member 178 may provide a cushioning effect or a damping effect when the secondary holder 176 is moved into engagement with the filled lens mold assembly 102 held by the lens-mold-assembly holder 140 of the filling workstation 112. According to an implementation, the biasing member 178 may include one or more springs, such as one or more coil springs.

According to various embodiments, the transfer arrangement 116 may include a carrier unit 180. The carrier unit 180 may include the primary holder 170 and the secondary holder 176. According to various embodiments, the carrier unit 180 of the transfer arrangement 116 may further include a holder swapping mechanism 182. The holder swapping mechanism 182 may be operable to exchange positions of the primary holder 170 and the secondary holder 176. Accordingly, the holder swapping mechanism 182 may enable the primary holder 170 and the secondary holder 176 to swap positions with each other. Hence, in the carrier unit 180 of the transfer arrangement 116, the positions of the primary holder 170 and the secondary holder 176 may be interchangeably swapped via the holder swapping mechanism 182.

According to various embodiments, the holder swapping mechanism 182 of the carrier unit 180 may include a frame 184. The frame 184 may be rotatable about a frame rotational axis 185. According to various embodiments, the primary holder 170 and the secondary holder 176 may be coupled to the frame 184 in a manner so as to be spaced angularly apart from each other around the frame rotational axis 185. Accordingly, the primary holder 170 and the secondary holder 176 may be disposed at different positions of the frame 184 such that the primary holder 170 and the secondary holder 176 may be angularly spaced apart from each other with respect to the frame rotational axis 185. For example, the primary holder 170 and the secondary holder 176 may be at different radial positions with respect to the frame rotational axis 185. According to an implementation, the primary holder 170 and the secondary holder 176 may be angularly spaced apart by 180° so as to be directly opposite each other, or 90° so as to be perpendicular from each other. According to various embodiments, the holder swapping mechanism 182 may include a rotary actuator for rotating the frame 184. Accordingly, the rotary actuator may be controlled to control the rotation of the frame 184 for exchanging or switching or swapping the positions of the primary holder 170 and the secondary holder 176.

According to various embodiments, the carrier unit 180 may be moveable from the pre-filling workstation 114 to the filling workstation 112 for transferring the lens mold assembly 102 from the pre-filling workstation 114 to the filling workstation 112 using the primary holder 170, and moveable from the filling workstation 112 to the outbound conveyor for transferring the lens mold assembly 102 from the filling workstation 112 to the outbound conveyor using the secondary holder 176. Accordingly, the carrier unit 180 may be moved as a single unit, i.e., with the primary holder 170, the secondary holder 176 and the holder swapping mechanism 182 together, between the pre-filling workstation 114, the filling workstation 112 and the outbound conveyor. According to various embodiments, the transfer arrangement 116 may include a carrier movement mechanism 186 for moving the carrier unit 180. The carrier movement mechanism 186 may have a range of movement for reaching the pre-filling workstation 114, the filling workstation 112 and the outbound conveyor. According to various embodiments, the carrier movement mechanism 186 may include a robot mechanism including, but not limited to, a cartesian robot, a Selective Compliance Assembly Robot Arm (SCARA), an articulated robot, a cylindrical robot, a parallel robot, a polar robot, and a collaborative robot. According to various embodiments, the lens mold assembly 102 for different type of lens may have different size and/or diameter. The robot mechanism may be configured accordingly to adjust the pick-up positions and release positions for transferring the lens mold assembly. According to an implementation, the carrier movement mechanism 186 of the transfer arrangement 116 may include a cartesian robot in the form of a gantry robot. Accordingly, the carrier unit 180 may be mounted to the gantry robot and served as an end-effector of the gantry robot.

According to various embodiments, the carrier unit 180 may be further moveable from the inbound conveyor to the pre-filling workstation 114 for transferring the lens mold assembly 102 from the inbound conveyor to the pre-filling workstation 114 using the secondary holder 176. Accordingly, in addition to unloading the lens mold assembly 102 from the machine 100 after the lens mold assembly 102 is filled, the secondary holder 176 may be operated to load the machine 100 with new unfilled lens mold assembly by picking up the new unfilled lens mold assembly from the inbound conveyor and placing into the pre-filing workstation 114. Further, the carrier movement mechanism 186 may have a range of movement for reaching the inbound conveyor, the pre-filling workstation 114, the filling workstation 112 and the outbound conveyor.

Referring to FIG. 12, according to various embodiments, the lens-mold-assembly holder 140 of the filling workstation 112 may include a support ring 142. The support ring 142 may support the lens mold assembly 102 when the lens mold assembly 102 is held by the lens-mold-assembly holder 140. According to various embodiments, the support ring 142 may be disposed such that the holder axis 141 of the lens-mold-assembly holder 140 extends through a center of the support ring 142. According to an implementation, the support ring 142 may be dimensioned or sized smaller than a dimension or size of the lens mold assembly 102. Accordingly, the support ring 142 may be supporting the lens mold assembly 102 by abutting a center region of either the first mold part 104 or the second mold part 106 of the lens mold assembly 102. According to an implementation, the support ring 142 may be made of polyoxymethylene (POM).

According to various embodiments, the lens-mold-assembly holder 140 of the filling workstation 112 may further include a plurality of gripping fingers 144. The plurality of gripping fingers 144 may be distributed around the support ring 142. Accordingly, the plurality of gripping fingers 144 may surround the support ring 142. Further, the plurality of gripping fingers 144 may include two or three or four or five or six or more gripping fingers. According to various embodiments, each gripping finger 144 may be oriented parallel to the holder axis 141 of the lens-mold-assembly holder 140. Accordingly, the plurality of gripping fingers 144 may be parallel to each other and may spread around the support ring 142 in a cylindrical-like arrangement with respect to the holder axis 141 of the lens-mold-assembly holder 140. According to various embodiments, the plurality of gripping fingers 144 are movable radially with respect to the holder axis 141 of the lens-mold-assembly holder 140. For example, the plurality of gripping fingers 144 may be movable radially inwards with respect to the holder axis 141 of the lens-mold-assembly holder 140 to hold the lens mold assembly 102. The plurality of gripping fingers 144 may also be movable radially outwards with respect to the holder axis 141 of the lens-mold-assembly holder 140 to release a filled lens mold assembly 102 or to receive an unfilled lens mold assembly 102. According to an implementation, each gripping finger 144 may be made of stainless steel (SUS).

According to various embodiments, the lens-mold-assembly holder 140 of the filling workstation 112 may further include a finger actuating arrangement for driving or actuating the plurality of gripping fingers 144. For example, the finger actuating arrangement may include a single actuator for driving or actuating the movement of the plurality of gripping fingers 144 such that all the gripping fingers move together. As another example, the finger actuating arrangement may include one actuator for each gripping fingers 144 such that each gripping finger 144 may move independently. According to various embodiments, the finger actuating arrangement may be mechanical-based, electro-mechanical based, hydraulic based, pneumatic based, or piezoelectric based.

According to various embodiments, during transfer of the lens mold assembly 102 from the primary holder 170 to the lens-mold-assembly holder 140 of the filling workstation 112, the movement of the plurality of gripping fingers 144 of lens-mold-assembly holder 140 moving radially inwards with respect to the holder axis 141 of the lens-mold-assembly holder 140 to hold the lens mold assembly 102 may be synchronized with the primary holder 170 of the transfer arrangement 116 releasing the lens mold assembly 102 to the lens-mold-assembly holder 140 of the filling workstation 112. Accordingly, the closing of the plurality of gripping fingers 144 of lens-mold-assembly holder 140 inwards to hold the lens mold assembly 102 and the ceasing of holding the lens mold assembly 102 by the primary holder 170, via suction or friction or adhesive or fastener, may occur at the same time. By synchronizing the lens-mold-assembly holder 140 to hold the lens mold assembly 102 and the primary holder 170 to release the lens mold assembly 102, deformation of the lens mold assembly 102 may be avoided or prevented or minimised.

Various embodiments have provided a machine capable of automatic tape tail preparation to facilitate the tape opening as well as automatic pre-orientation of the lens mold assembly (e.g., in the pre-filling workstation) before transferring it to an automatic filling head (e.g., filling workstation) to ensure that the tape will be correctly placed in the filling head. This may remove the need of having an operator and may enable full automation of the filling operation. In various embodiments, once loaded into the filling head, there may be an automatic tape opener (e.g., tape opening unit) equipped with a tape fine aligning system (e.g., alignment arrangement) to enable a consistent and repeatable filling window to be opened in the lens mold assembly as well as alignment with the filling nozzle. This may reduce or remove or avoid or prevent the possibility of underfilling (causing defect) or accidental filling outside the lens mold assembly (e.g., monomer splash). Various embodiments may bring about a fully automated filling operation with enhanced accuracy and consistency during filling, which may result in better lens edge quality and lesser liquid molding material (e.g., monomer) leaks. Various embodiments also provided automatic transferring of unfilled lens mold assembly from the pre-filling workstation to the filling workstation; hands-free filling by the filling workstation whereby the filling workstation is equipped with a lens-mold-assembly holder to hold the lens mold assembly through the automatic filling process at the filling workstation; and automatic transferring of the filled lens mold assembly from the filling workstation to an outbound conveyor.

Although representative processes and articles have been described in detail herein, those skilled in the art will recognize that various substitutions and modifications may be made without departing from the scope of what is described and defined by the appended claims.

## Claims

1. A machine for filling of a lens mold assembly, wherein the lens mold assembly comprises a first mold part, a second mold part spaced apart from the first mold part to define a molding cavity therebetween, and a tape surrounding the molding cavity with a first longitudinal side of the tape along a perimeter of the first mold part and a second longitudinal side of the tape along a perimeter of the second mold part, whereby a first tail-end portion of the tape lap over a second tail-end portion of the tape, the machine comprising
a filling workstation for filling the molding cavity of the lens mold assembly with a liquid molding material; and
a pre-filling workstation for preparing the lens mold assembly prior to transferring to the filling workstation, the pre-filling workstation being configured to set the first tail-end portion of the tape in a pre-determined disposition apart from the second tail-end portion in preparation for transferring to the filling workstation,
wherein the pre-filling workstation comprises
a lens-mold-assembly-rotation unit having a rotary component rotatable about a component rotational axis, wherein the rotary component is operable to hold and rotate the lens mold assembly with the component rotational axis extending through a center of the first mold part and a center of the second mold part,
a tape-tail-lifting unit having a force applicator disposed at a first radial position from the component rotational axis of the rotary component of the lens-mold-assembly-rotation unit, wherein the force applicator is operable to apply a force to graze a circumferential surface of the tape around the lens mold assembly as the lens mold assembly is being rotated by the lens-mold-assembly-rotation unit, wherein the first tail-end portion is lifted open by the force when the force interacts with the first tail-end portion of the tape, and
a tape-tail-finding unit comprising
a tape-tail-finding-member at a second radial position from the component rotational axis of the rotary component of the lens-mold-assembly-rotation unit, the tape-tail-finding-member having a tape contact surface, wherein the tape contact surface of the tape-tail-finding-member is capable of intercepting the first tail end portion of the tape of the lens mold assembly as the lens mold assembly is being rotated on the rotary component of the lens-mold-assembly-rotation unit, and
a sensing arrangement disposed in relation to the tape-tail-finding-member, the sensing arrangement being configured to detect whether the first tail end portion of the tape is in contact with the tape contact surface of the tape-tail-finding-member, wherein the lens-mold-assembly rotation unit is configured to stop the rotary component from rotating based on the sensing arrangement detecting the first tail end portion of the tape is in contact with the tape contact surface of the tape-tail-finding-member.

2. The machine as claimed in claim 1, wherein the tape-tail-finding unit of the pre-filling workstation further comprises a tape-tail-pusher having a pusher tip movable between an extended state and a retracted state with respect to the tape contact surface of the tape-tail-finding-member, wherein, in the extended state, the pusher tip protrudes from the tape contact surface in a manner so as to push back the first tail end portion of the tape of the lens mold assembly from the tape contact surface.

3. The machine as claimed in claim 1 or 2, wherein the tape-tail-finding-member is moveable relative to the lens-mold-assembly-rotation unit, and wherein the tape-tail-finding-member is moved from a withdrawn position to the second radial position upon provision of the lens mold assembly to the rotary component of the lens-mold-assembly-rotation unit.

4. The machine as claimed in any one of claims 1 to 3, wherein the filling workstation comprises
a lens-mold-assembly holder having a holder axis and operable to hold the lens mold assembly with the holder axis extending through the center of the first mold part and the center of the second mold part of the lens mold assembly; and
a tape opening unit comprising a gripping sub-unit having a gripper disposed relative to the lens-mold-assembly holder to hold the first tail-end portion of the tape of the lens mold assembly, which is set at the pre-determined disposition by the pre-filling workstation, when the lens mold assembly is transferred from the pre-filling workstation to the filling workstation.

5. The machine as claimed in claim 4, wherein the gripper is movable from a first position proximal to the lens-mold-assembly holder to a second position distal from the lens-mold-assembly holder for pulling the first tail-end portion of the tape of the lens mold assembly to open away from the second tail-end portion of the tape of the lens mold assembly.

6. The machine as claimed in claim 5, wherein the filling workstation further comprises
a filling nozzle having a nozzle axis, the filling nozzle being oriented with the nozzle axis perpendicular to the holder axis of the lens-mold-assembly holder, and
an alignment arrangement comprising at least one sensor fixedly disposed relative to the filling nozzle to detect an end edge of the second tail-end portion of the tape when the first tail-end portion of the tape is opened away from the second tail-end portion of the tape by the gripper,
wherein the lens-mold-assembly holder is rotatable about the holder axis, wherein, when the first tail-end portion of the tape is opened away from the second tail-end portion of the tape by the gripper, the lens-mold-assembly holder is operable cooperatively with the alignment arrangement to rotate the lens mold assembly about the holder axis based on feedback from the at least one sensor of the alignment arrangement to align the end edge of the second tail-end portion of the tape to a pre-set position so as to orient the lens mold assembly into a pre-determined orientation for filling of the liquid molding material.

7. The machine as claimed in claim 6, wherein the filling workstation further comprises
a tape engagement unit comprising an engagement blade disposed at a radial position from the holder axis of the lens-mold-assembly holder,
wherein, when the gripper is moved to the second position for pulling the first tail-end of the tape to open away from the second tail-end of the tape, the tape is rested against a tip of the engagement blade of the tape engagement unit and bent by the tip of the engagement blade of the tape engagement unit to form a fold,
wherein, in the pre-determined orientation of the lens mold assembly, a filling window of the lens mold assembly defined by a gap between the fold of the tape at the tip of the engagement blade of the tape engagement unit and the end edge of the second tail-end portion of the tape has a pre-determined arc length.

8. The machine as claimed in claim 6 or 7, wherein the filling nozzle and the at least one sensor of the alignment arrangement are moveable together between a stowed position and an operative position, wherein, in the operative position, the at least one sensor of the alignment arrangement is operable to detect whether the end edge of the second tail-end portion of the tape is aligned to the pre-set position.

9. The machine as claimed in any one of claims 4 to 8, wherein the gripping sub-unit comprises a tape-tail-sensing arrangement associated with the gripper, wherein the tape-tail-sensing arrangement is configured to detect whether the first tail end portion of the tape is in place for the gripper to hold the first tail end portion of the tape.

10. The machine as claimed in claim 9, wherein the gripper is actuated to hold the first tail end portion of the tape when the tape-tail-sensing arrangement detects the first tail end portion of the tape is in place for the gripper to hold the first tail end portion of the tape.

11. The machine as claimed in any one of claims 4 to 10, further comprising a transfer arrangement configured to transfer the lens mold assembly from the pre-filling workstation to the filling workstation,
wherein the transfer arrangement comprises
a primary holder movable between the pre-filling workstation and the filling workstation for transferring the lens mold assembly from the pre-filling workstation to the filling workstation, wherein the primary holder is operable to pick up the lens mold assembly from the rotary component of the lens-mold-assembly-rotation unit of the pre-filling workstation when the primary holder is at the pre-filling workstation and to release the lens mold assembly to the lens-mold-assembly holder of the filling workstation when the primary holder is at the filling workstation, and
a tape-tail-retainer associated with the primary holder, wherein the tape-tail-retainer maintains the first tail-end portion of the tape of the lens mold assembly in the pre-determined disposition when the lens mold assembly is held by the primary holder, wherein, when the primary holder is picking up the lens mold assembly from the pre-filling workstation, the tape-tail-retainer is inserted between the tape contact surface of the tape-tail-finding-member of the tape-tail-finding-unit of the pre-filling workstation and the first tail-end portion of the tape of the lens mold assembly while the lens mold assembly is held by the rotary component of the lens-mold-assembly-rotation unit of the pre-filling workstation,
wherein, when the primary holder releases the lens mold assembly to the lens-mold-assembly holder of the filling workstation, the tape-tail-retainer transfers the first tail-end portion of the tape of the lens mold assembly in the pre-determined disposition to the gripper of the gripping sub-unit of the tape opening unit.

12. The machine as claimed in claim 11, wherein the transfer arrangement is further configured to transfer the lens mold assembly from the filling workstation to an outbound conveyor, wherein the transfer arrangement comprises a secondary holder movable between the filling workstation and the outbound conveyor, wherein the secondary holder is operable to pick up the lens mold assembly from the lens-mold-assembly holder of the filling workstation when the secondary holder is at the filling workstation and to release the lens mold assembly to the outbound conveyor when the secondary holder is at the outbound conveyor.

13. The machine as claimed in claim 12, wherein the transfer arrangement comprises a carrier unit, wherein the carrier unit comprises
the primary holder,
the secondary holder, and
a holder swapping mechanism for exchanging positions of the primary holder and the secondary holder.

14. The machine as claimed in claim 13, wherein the holder swapping mechanism comprises a frame rotatable about a frame rotational axis, wherein the primary holder and the secondary holder are coupled to the frame in a manner so as to be spaced angularly apart from each other around the frame rotational axis.

15. The machine as claimed in any one of claims 4 to 14, wherein the lens-mold-assembly holder of the filling workstation comprises
a support ring for supporting the lens mold assembly, wherein the holder axis of the lens-mold-assembly holder extends through a center of the support ring, and
a plurality of gripping fingers distributed around the support ring, each gripping finger oriented parallel to the holder axis of the lens-mold-assembly holder,
wherein the plurality of gripping fingers is movable radially inwards with respect to the holder axis of the lens-mold-assembly holder to hold the lens mold assembly.
